# EUROPEAN PATENT APPLICATION

(11) **EP 4 818 757 A1**
(43) Date of publication of application: **07.10.2026**
(21) Application number: 26165652.4
(22) Date of filing: 18.03.2026
(51) Int. Cl.: G01S 19/22, G01S 19/39, G01S 19/43

(54) **GNSS POSITION OUTLIER DETECTION USING CODE BIAS DEVIATION**

(30) Priority: 28.03.2025 US 202519094168
(71) Applicant: Trimble Inc, Westminster CO 80021 (US)
(72) Inventor: WANG, Jau-Hsiung, Westminster, 80021 (US)
(74) Representative: AWA Sweden AB

(57) **Abstract**

Described herein are systems, methods, and other techniques for detecting GNSS position outliers. GNSS observables are generated based on satellite signals received at a GNSS receiver. A position estimate is computed based on the GNSS observables. A set of code biases for the set of satellite signals are generated based on the position estimate and the GNSS observables. A set of code bias deviations for the set of satellite signals are computed as a difference between, for each of the set of satellite signals, a code bias of the set of code biases and a code bias model of a set of code bias models. A position error estimate is computed based on the set of code bias deviations.

## Description

### BACKGROUND OF THE INVENTION

Global navigation satellite systems (GNSS) are systems that use medium Earth orbit (MEO) or geosynchronous orbit (GEO) satellites to provide geospatial positioning of receiving devices. Typically, wireless signals transmitted from such satellites can be used by GNSS receivers to determine their position, velocity, and time. Examples of currently operational GNSSs include the United States' Global Positioning System (GPS), Russia's Global Navigation Satellite System (GLONASS), China's BeiDou Satellite Navigation System, the European Union's (EU) Galileo, Japan's Quasi-Zenith Satellite System (QZSS), and the Indian Regional Navigation Satellite System (IRNSS). Today, GNSS receivers are used in a wide range of applications, including navigation (e.g., for automobiles, planes, boats, persons, animals, freight, military precision-guided munitions, etc.), surveying, mapping, and time referencing.

The accuracy of GNSS receivers has improved drastically over the past few decades due to several technological improvements. One such improvement is the use of differential measurement techniques, in which GNSS signals received by a fixed receiver are used to generate correction data that is communicated to a mobile receiver. Typically, a roving receiver (or simply "rover") receives the correction data from a reference source or base station that already knows its exact location, in addition to receiving signals from GNSS satellites. To generate the correction data, the base station first tracks all the satellites in view and measures their pseudoranges. Next, the base station computes its position and compares the computed position to its known position to generate a list of corrections needed to make the measured pseudorange values accurate for all visible satellites. The correction data is then communicated to the rover, which applies these corrections to its computed pseudoranges to produce a more accurate position. This technique may be referred to as differential GNSS.

Another improvement to GNSS accuracy came through the use of real-time kinematic (RTK) measurement techniques, in which the rover determines its position relative to a base station by comparing the phases of carrier waves received at the rover with those measured at the base station. Multiple satellite signals transmitted by GNSS satellites are used to measure these carrier phases. Once the rover receives a set of carrier phases from the base station, it compares them with its own set of carrier phases. This comparison allows the rover to calculate a vector between itself and the base station. With the known coordinates of the base station, which can be communicated to the rover by the base station, the rover can compute its precise location within a specific coordinate frame. The carrier signal used in RTK has a shorter wavelength than the width of a PRN code, enabling more accurate distance measurement. RTK enables fast and centimeter-level positioning anywhere within a large area.

Another positioning technology was developed and referred to as real-time extended (RTX), which also provides centimeter-level positioning without the need for a local base station. RTX relies on a network of reference stations strategically located around the world. These reference stations continuously collect precise GNSS data and monitor satellite signals. The data collected by the reference stations is sent to a centralized processing center. In the processing center, advanced algorithms and models are employed to compute highly accurate corrections for satellite orbits, clock errors, and atmospheric conditions. The computed correction data (optionally referred to as RTX correction data) is communicated to the rover via satellites (which act as relay stations) or via cellular or IP networks. The rover receives these correction signals and uses them to enhance its position calculation in real-time by accounting for systematic errors and distortions present in the GNSS signals.

### SUMMARY OF THE INVENTION

A summary of the various embodiments of the invention is provided below as a list of examples. As used below, any reference to a series of examples is to be understood as a reference to each of those examples disjunctively (e.g., "Examples 1-4" is to be understood as "Examples 1, 2, 3, or 4").

Example 1 is a method comprising: receiving, at a global navigation satellite system (GNSS) receiver, a set of satellite signals from a set of satellites; generating GNSS observables based on the set of satellite signals; computing a position estimate for the GNSS receiver based on the GNSS observables; generating a set of code biases for the set of satellite signals based on the position estimate and the GNSS observables; computing a set of code bias deviations for the set of satellite signals as a difference between, for each of the set of satellite signals, a code bias of the set of code biases and a code bias model of a set of code bias models; and computing a position error estimate based on the set of code bias deviations.

Example 2 is the method of example(s) 1, further comprising: in response to determining that the position error estimate is greater than a threshold, removing the position estimate.

Example 3 is the method of example(s) 1, further comprising: in response to determining that the position error estimate is less than a threshold, retaining the position estimate.

Example 4 is the method of example(s) 1-3, further comprising: determining, based on whether the position estimate was computed with sufficiently clean data, whether to (i) generate or update the set of code bias models or (ii) to compute the position error estimate using the set of code bias models.

Example 5 is the method of example(s) 4, wherein it is determined to generate or update the set of code bias models if a real-time kinematic (RTK) engine is used to compute the position estimate, and wherein it is determined to compute the position error estimate using the set of code bias models if a differential GNSS (DGNSS) engine is used to compute the position estimate.

Example 6 is the method of example(s) 1-5, further comprising: determining whether the set of code bias models have been previously generated, wherein the set of code bias deviations are computed in response to determining that the set of code bias models have been previously generated.

Example 7 is the method of example(s) 1-6, wherein the GNSS observables include one or both of a set of pseudoranges and a set of carrier phase measurements.

Example 8 is the method of example(s) 1-7, further comprising: generating a set of satellite positions based on the set of satellite signals, wherein the position estimate is computed further based on the set of satellite positions, and wherein the set of code biases are generated further based on the set of satellite positions.

Example 9 is a non-transitory computer-readable medium comprising instructions that, when executed by one or more processors, cause the one or more processors to perform operations comprising: generating global navigation satellite system (GNSS) observables based on a set of satellite signals received at a GNSS receiver from a set of satellites; computing a position estimate for the GNSS receiver based on the GNSS observables; generating a set of code biases for the set of satellite signals based on the position estimate and the GNSS observables; computing a set of code bias deviations for the set of satellite signals as a difference between, for each of the set of satellite signals, a code bias of the set of code biases and a code bias model of a set of code bias models; and computing a position error estimate based on the set of code bias deviations.

Example 10 is the non-transitory computer-readable medium of example(s) 9, wherein the operations further comprise: in response to determining that the position error estimate is greater than a threshold, removing the position estimate.

Example 11 is the non-transitory computer-readable medium of example(s) 9, wherein the operations further comprise: in response to determining that the position error estimate is less than a threshold, retaining the position estimate.

Example 12 is the non-transitory computer-readable medium of example(s) 9-11, wherein the operations further comprise: determining, based on whether the position estimate was computed with sufficiently clean data, whether to (i) generate or update the set of code bias models or (ii) to compute the position error estimate using the set of code bias models.

Example 13 is the non-transitory computer-readable medium of example(s) 12, wherein it is determined to generate or update the set of code bias models if a real-time kinematic (RTK) engine is used to compute the position estimate, and wherein it is determined to compute the position error estimate using the set of code bias models if a differential GNSS (DGNSS) engine is used to compute the position estimate.

Example 14 is the non-transitory computer-readable medium of example(s) 9-13, further comprising: determining whether the set of code bias models have been previously generated, wherein the set of code bias deviations are computed in response to determining that the set of code bias models have been previously generated.

Example 15 is the non-transitory computer-readable medium of example(s) 9-14, wherein the GNSS observables include one or both of a set of pseudoranges and a set of carrier phase measurements.

Example 16 is the non-transitory computer-readable medium of example(s) 9-15, further comprising: generating a set of satellite positions based on the set of satellite signals, wherein the position estimate is computed further based on the set of satellite positions, and wherein the set of code biases are generated further based on the set of satellite positions.

Example 17 is a system comprising: one or more processors; and a computer-readable medium comprising instructions that, when executed by the one or more processors, cause the one or more processors to perform operations comprising: generating global navigation satellite system (GNSS) observables based on a set of satellite signals received at a GNSS receiver from a set of satellites; computing a position estimate for the GNSS receiver based on the GNSS observables; generating a set of code biases for the set of satellite signals based on the position estimate and the GNSS observables; computing a set of code bias deviations for the set of satellite signals as a difference between, for each of the set of satellite signals, a code bias of the set of code biases and a code bias model of a set of code bias models; and computing a position error estimate based on the set of code bias deviations.

Example 18 is the system of example(s) 17, further comprising: in response to determining that the position error estimate is greater than a threshold, removing the position estimate.

Example 19 is the system of example(s) 17, further comprising: in response to determining that the position error estimate is less than a threshold, retaining the position estimate.

Example 20 is the system of example(s) 17-19, further comprising: determining, based on whether the position estimate was computed with sufficiently clean data, whether to (i) generate or update the set of code bias models or (ii) to compute the position error estimate using the set of code bias models.

Example 21 is the system of example(s) 20, wherein it is determined to generate or update the set of code bias models if a real-time kinematic (RTK) engine is used to compute the position estimate, and wherein it is determined to compute the position error estimate using the set of code bias models if a differential GNSS (DGNSS) engine is used to compute the position estimate.

Example 22 is the system of example(s) 17-21, further comprising: determining whether the set of code bias models have been previously generated, wherein the set of code bias deviations are computed in response to determining that the set of code bias models have been previously generated.

Example 23 is the system of example(s) 17-22, wherein the GNSS observables include one or both of a set of pseudoranges and a set of carrier phase measurements.

Example 24 is the system of example(s) 17-23, further comprising: generating a set of satellite positions based on the set of satellite signals, wherein the position estimate is computed further based on the set of satellite positions, and wherein the set of code biases are generated further based on the set of satellite positions.

Example 25 is a method comprising: receiving, at a global navigation satellite system (GNSS) receiver, a set of satellite signals from a set of satellites; generating GNSS observables based on the set of satellite signals; computing a first position estimate for the GNSS receiver based on the GNSS observables; generating a set of code biases for the set of satellite signals based on the first position estimate and the GNSS observables; computing a set of code bias deviations for the set of satellite signals as a difference between, for each of the set of satellite signals, a code bias of the set of code biases and a code bias model of a set of code bias models; computing a set of code multipath error estimates based on the set of code bias deviations; identifying, from the set of code multipath error estimates, a code multipath error estimate that is a statistical outlier; and computing a second position estimate for the GNSS receiver based on the GNSS observables after removing a GNSS observable associated with the code multipath error estimate that is a statistical outlier.

Example 26 is the method of example(s) 25, further comprising: generating a second set of code biases for the set of satellite signals based on the second position estimate, wherein the set of code biases are a first set of code biases; computing a second set of code bias deviations for the set of satellite signals as a difference between, for at least one of the set of satellite signals, a code bias of the second set of code biases and a code bias model of the set of code bias models; computing a second set of code multipath error estimates based on the second set of code bias deviations, wherein the set of code multipath error estimates are a first set of code multipath error estimates; and determining whether there are any statistical outliers in the second set of code multipath error estimates.

Example 27 is the method of example(s) 26, further comprising: identifying, from the second set of code multipath error estimates, a second code multipath error estimate that is a statistical outlier, wherein the code multipath error estimate is a first multipath error estimate; and computing a third position estimate for the GNSS receiver based on the GNSS observables after removing a GNSS observable associated with the second code multipath error estimate.

Example 28 is the method of example(s) 26, further comprising: determining that there are no statistical outliers in the second set of code multipath error estimates; and in response to determining that there are no statistical outliers in the second set of code multipath error estimates, retaining the second position estimate.

Example 29 is the method of example(s) 25-28, wherein the GNSS observables include one or both of a set of pseudoranges and a set of carrier phase measurements.

Example 30 is the method of example(s) 25-29, wherein computing the set of code multipath error estimates based on the set of code bias deviations includes: computing a position error estimate based on the set of code bias deviations, wherein the set of code multipath error estimates are computed further based on the position error estimate.

Example 31 is the method of example(s) 30, further comprising: determining, based on whether the position estimate was computed with sufficiently clean data, whether to (i) generate or update the set of code bias models or (ii) to compute the position error estimate using the set of code bias models.

Example 32 is a non-transitory computer-readable medium comprising instructions that, when executed by one or more processors, cause the one or more processors to perform operations comprising: generating global navigation satellite system (GNSS) observables based on a set of satellite signals received at a GNSS receiver from a set of satellites; computing a first position estimate for the GNSS receiver based on the GNSS observables; generating a set of code biases for the set of satellite signals based on the first position estimate and the GNSS observables; computing a set of code bias deviations for the set of satellite signals as a difference between, for each of the set of satellite signals, a code bias of the set of code biases and a code bias model of a set of code bias models; computing a set of code multipath error estimates based on the set of code bias deviations; identifying, from the set of code multipath error estimates, a code multipath error estimate that is a statistical outlier; and computing a second position estimate for the GNSS receiver based on the GNSS observables after removing a GNSS observable associated with the code multipath error estimate that is a statistical outlier.

Example 33 is the non-transitory computer-readable medium of example(s) 32, wherein the operations further comprise: generating a second set of code biases for the set of satellite signals based on the second position estimate, wherein the set of code biases are a first set of code biases; computing a second set of code bias deviations for the set of satellite signals as a difference between, for at least one of the set of satellite signals, a code bias of the second set of code biases and a code bias model of the set of code bias models; computing a second set of code multipath error estimates based on the second set of code bias deviations, wherein the set of code multipath error estimates are a first set of code multipath error estimates; and determining whether there are any statistical outliers in the second set of code multipath error estimates.

Example 34 is the non-transitory computer-readable medium of example(s) 33, wherein the operations further comprise: identifying, from the second set of code multipath error estimates, a second code multipath error estimate that is a statistical outlier, wherein the code multipath error estimate is a first multipath error estimate; and computing a third position estimate for the GNSS receiver based on the GNSS observables after removing a GNSS observable associated with the second code multipath error estimate.

Example 35 is the non-transitory computer-readable medium of example(s) 33, wherein the operations further comprise: determining that there are no statistical outliers in the second set of code multipath error estimates; and in response to determining that there are no statistical outliers in the second set of code multipath error estimates, retaining the second position estimate.

Example 36 is the non-transitory computer-readable medium of example(s) 32-35, wherein the GNSS observables include one or both of a set of pseudoranges and a set of carrier phase measurements.

Example 37 is the non-transitory computer-readable medium of example(s) 32-36, wherein computing the set of code multipath error estimates based on the set of code bias deviations includes: computing a position error estimate based on the set of code bias deviations, wherein the set of code multipath error estimates are computed further based on the position error estimate.

Example 38 is the non-transitory computer-readable medium of example(s) 37, wherein the operations further comprise: determining, based on whether the position estimate was computed with sufficiently clean data, whether to (i) generate or update the set of code bias models or (ii) to compute the position error estimate using the set of code bias models.

Example 39 is a system comprising: one or more processors; and a computer-readable medium comprising instructions that, when executed by the one or more processors, cause the one or more processors to perform operations comprising: generating global navigation satellite system (GNSS) observables based on a set of satellite signals received at a GNSS receiver from a set of satellites; computing a first position estimate for the GNSS receiver based on the GNSS observables; generating a set of code biases for the set of satellite signals based on the first position estimate and the GNSS observables; computing a set of code bias deviations for the set of satellite signals as a difference between, for each of the set of satellite signals, a code bias of the set of code biases and a code bias model of a set of code bias models; computing a set of code multipath error estimates based on the set of code bias deviations; identifying, from the set of code multipath error estimates, a code multipath error estimate that is a statistical outlier; and computing a second position estimate for the GNSS receiver based on the GNSS observables after removing a GNSS observable associated with the code multipath error estimate that is a statistical outlier.

Example 40 is the system of example(s) 39, wherein the operations further comprise: generating a second set of code biases for the set of satellite signals based on the second position estimate, wherein the set of code biases are a first set of code biases; computing a second set of code bias deviations for the set of satellite signals as a difference between, for at least one of the set of satellite signals, a code bias of the second set of code biases and a code bias model of the set of code bias models; computing a second set of code multipath error estimates based on the second set of code bias deviations, wherein the set of code multipath error estimates are a first set of code multipath error estimates; and determining whether there are any statistical outliers in the second set of code multipath error estimates.

Example 41 is the system of example(s) 40, wherein the operations further comprise: identifying, from the second set of code multipath error estimates, a second code multipath error estimate that is a statistical outlier, wherein the code multipath error estimate is a first multipath error estimate; and computing a third position estimate for the GNSS receiver based on the GNSS observables after removing a GNSS observable associated with the second code multipath error estimate.

Example 42 is the system of example(s) 40, wherein the operations further comprise: determining that there are no statistical outliers in the second set of code multipath error estimates; and in response to determining that there are no statistical outliers in the second set of code multipath error estimates, retaining the second position estimate.

Example 43 is the system of example(s) 39-42, wherein the GNSS observables include one or both of a set of pseudoranges and a set of carrier phase measurements.

Example 44 is the system of example(s) 39-43, wherein computing the set of code multipath error estimates based on the set of code bias deviations includes: computing a position error estimate based on the set of code bias deviations, wherein the set of code multipath error estimates are computed further based on the position error estimate.

### BRIEF DESCRIPTION OF THE DRAWINGS

The accompanying drawings, which are included to provide a further understanding of the disclosure, are incorporated in and constitute a part of this specification, illustrate embodiments of the disclosure and together with the detailed description serve to explain the principles of the disclosure. No attempt is made to show structural details of the disclosure in more detail than may be necessary for a fundamental understanding of the disclosure and various ways in which it may be practiced.
FIG. 1 illustrates an example system for detecting GNSS solution outliers.
FIG. 2 illustrates an example method of detecting GNSS position outliers.
FIGS. 3A-3D illustrate examples of the computed code bias for different satellites when using an RTK engine as the position estimator for data captured in an open-sky environment.
FIGS. 4A-4D illustrate examples of the code bias model for different satellites using a least squares polynomial fitting method.
FIGS. 5A-5H illustrate examples of the computed code bias, code bias model, and code bias deviation for different satellites from a test conducted in urban areas.
FIG. 6 illustrates the true position error versus position standard deviation output by the GNSS estimator and position error estimates generated by the described method using the code bias deviations for the urban area data.
FIG. 7 illustrates an example of using the true position error versus position standard deviation output by the GNSS estimator for outlier detection in urban areas.
FIG. 8 illustrates an example of using the true position error versus position error estimates generated by the described method using the code bias deviations for outlier detection in urban areas.
FIG. 9 illustrates an example system for detecting and removing GNSS observable outliers.
FIG. 10 illustrates an example method of detecting and removing GNSS observable outliers.
FIG. 11 illustrates a method of detecting and correcting GNSS position outliers by removing GNSS observable outliers.
FIG. 12 illustrates a method of detecting GNSS position outliers.
FIG. 13 illustrates a method of detecting and removing GNSS observable outliers.
FIG. 14 illustrates an example computer system comprising various hardware elements.

### DETAILED DESCRIPTION OF THE INVENTION

Global navigation satellite system (GNSS) positioning is based on line-of-sight (LOS) signals from satellites in space to measure the ranges from known satellite positions to unknown positions on land, at sea, and in air and space. A GNSS receiver receives and decodes satellite signals to derive the satellite positions and range information. The range information is subject to various errors that can be categorized into systematic errors and random errors. Systematic errors contain receiver clock bias, satellite orbit and clock error, ionospheric delay, and tropospheric delay. Random errors are introduced by multipath and noise. The systematic errors change slowly with time and can be well modeled and estimated or corrected by using differential GNSS (DGNSS), real-time kinematic (RTK) or precise point positioning (PPP) methods. However, errors and noise due to multipath change quickly and randomly with the environment and are difficult to model and estimate properly, especially in harsh GNSS environments in the presence of multiple non-line-of-sight signals and multipaths. Therefore, in such environments, GNSS solutions can be subject to large position errors without reliable position error estimates.

Some embodiments of the present disclosure relate to systems and methods for reliably estimating GNSS position errors in harsh environments. Advantageously, embodiments do not require any prior information regarding the receiver/antenna type or the surrounding environment. The position error estimates can offer users insight into the level of precision and reliability associated with the reported location and can thus be used for outlier detection, GNSS quality control, and position error model in multi-sensor fusion. Upon detecting a position outlier, the system can tag the position estimate as an outlier and optionally remove the position estimate from the set of time-sequenced position estimates outputted by the GNSS receiver.

Some embodiments of the present disclosure relate to systems and methods for correcting or improving position estimates that have been tagged as outliers. Embodiments may achieve robust GNSS estimation in harsh environments by first detecting the GNSS observable outliers and then computing the best possible position solutions by excluding the outliers in GNSS observables iteratively until no outliers are detected, or the number of clean observables reaches the minimum requirement for positioning. In some cases, embodiments detect and exclude the GNSS observable outliers from being processed by the GNSS estimator when estimating the position error, resulting in robust GNSS solutions with reliable position error estimates.

As used herein, the terms "clean GNSS data", "clean observables", "clean GNSS observables", or "clean data" may be used interchangeably and generally mean that the data is free from significant errors, distortions, or anomalies that are contributed by multipath and signal degradation from the surrounding environments and could compromise its accuracy and reliability. Accordingly, the step of determining "whether GNSS data is sufficiently clean" may include determining whether the data is sufficiently free from multipath and signal degradation errors, distortions, or anomalies that could compromise its accuracy and reliability.

In some examples, range information from the GNSS receiver to the *k*th satellite can be derived from the pseudorange observable *ρ^{k}* and carrier phase observable *ϕ^{k}* from the *k*th satellite which, can be modeled as: ${ρ}^{k} = {r}^{k} + c \left(dT-{dt}^{k}\right) + {I}^{k} + {T}^{k} + {ε}_{ρ}^{k}$ (1) ${ϕ}^{k} = \frac{1}{λ} \left({r}^{k}+c\left(dT-{dt}^{k}\right)-{I}^{k}+{T}^{k}\right) + {N}^{k} + \frac{1}{λ} {ε}_{ϕ}^{k}$ (2) where *r^{k}* is the true range, *dT* is the receiver clock offset, *dt^{k}* is the satellite clock error, *I^{k}* is the ionosphere delay, *T^{k}* is the troposphere delay, *N^{k}* is the carrier phase integer ambiguity, *λ* is the carrier phase wavelength, ${ε}_{ρ}^{k}$ is the code multipath and noise, ${ε}_{ϕ}^{k}$ is the phase multipath and noise in range domain, and *c* is the speed of light.

By differencing the GNSS observable between the kth satellite and the jth satellite, the following is obtained: $∇ {ρ}^{kj} = ∇ {r}^{kj} - c ∇ {dt}^{kj} + ∇ {I}^{kj} + ∇ {T}^{kj} + ∇ {ε}_{ρ}^{kj}$ (3) $∇ {ϕ}^{kj} = \frac{1}{λ} \left(∇{r}^{kj}-c∇{dt}^{kj}-∇{I}^{kj}+∇{T}^{kj}\right) + ∇ {N}^{kj} + \frac{1}{λ} ∇ {ε}_{ϕ}^{kj}$ (4) The single differenced pseudorange and carrier phase biases are denoted as: $∇ {b}_{ρ}^{kj} = - c ∇ {dt}^{kj} + ∇ {I}^{kj} + ∇ {T}^{kj}$ (5) $∇ {b}_{ϕ}^{kj} = \frac{1}{λ} \left(-c∇{dt}^{kj}-∇{I}^{kj}+∇{T}^{kj}\right) + ∇ {N}^{kj}$ (6) Equations (3) and (4) can be rewritten as: $∇ {ρ}^{kj} = ∇ {r}^{kj} + ∇ {b}_{ρ}^{kj} + ∇ {ε}_{ρ}^{kj}$ (7) $∇ {ϕ}^{kj} = \frac{1}{λ} ∇ {r}^{kj} + ∇ {b}_{ϕ}^{kj} + \frac{1}{λ} ∇ {ε}_{ϕ}^{kj}$ (8)

Let vector **x** = (*x, y, z*) and **x*^{k}*** = (*x^{k}, y^{k}, z^{k}*)*,* for *k =* 1, 2, ..., K, represent the position of the user at the time of the measurement and the position of the kth satellite at the time of signal transmission. The user-to-satellite LOS range is: ${r}^{k} = \sqrt{{\left({x}^{k}-x\right)}^{2} + {\left({y}^{k}-y\right)}^{2} + {\left({z}^{k}-z\right)}^{2}} = \left‖{x}^{k}-x\right‖$ (9) Equations (7) and (8) can be rewritten as: $∇ {ρ}_{c}^{kj} = ∇ {ρ}^{kj} - ∇ {b}_{ρ}^{kj} = {r}^{k} - {r}^{j} + ∇ {ε}_{ρ}^{kj} = \left‖{x}^{k}-x\right‖ - \left‖{x}^{j}-x\right‖ + ∇ {ε}_{ρ}^{kj}$ (10) $λ ∇ {ϕ}_{c}^{kj} = λ ∇ {ϕ}^{kj} - λ ∇ {b}_{ϕ}^{kj} = {r}^{k} - {r}^{j} + λ ∇ {ε}_{ϕ}^{kj} = \left‖{x}^{k}-x\right‖ - \left‖{x}^{j}-x\right‖ + λ ∇ {ε}_{ϕ}^{kj}$ (11) where $∇ {ρ}_{c}^{kj}$ and $∇ {ϕ}_{c}^{kj}$ are the corrected single differenced pseudorange and carrier phase observable.

Equations (10) and (11) are nonlinear equations that each involve 3 unknowns, i.e., 3 components of **x**. Clearly, 3 equations (4 satellites) are required at a minimum to solve for the 3 unknowns. A simple approach to solving the K-1 equations is to linearize them about an approximate user position and solve them iteratively. The example of position estimation with the single differenced pseudorange is described here. First, let **x₀** = (*x*₀, *y*₀, *z*₀) be the first guess of the user position and $∇ {ρ}_{0}^{kj}$ be the corresponding approximation of the corrected single differenced pseudorange based on the initial guess **x₀** $∇ {ρ}_{0}^{kj} = \left‖{x}^{k}-{x}_{0}\right‖ - \left‖{x}^{j}-{x}_{0}\right‖$ (12)

Let the true position be represented as x = **x₀** + ***δ*x** where ***δ*x** is the unknown correction to be applied to the initial estimates. The linear equation to determine the unknown ***δ*x** can be written as: $\begin{matrix}δ ∇ {ρ}^{kj} = ∇ {ρ}_{c}^{kj} - ∇ {ρ}_{0}^{kj} = \left(\left‖{x}^{k}-{x}_{0}-δx\right‖-\left‖{x}^{j}-{x}_{0}-δx\right‖\right) - \left(\left‖{x}^{k}-{x}_{0}\right‖-\left‖{x}^{j}-{x}_{0}\right‖\right) \\ = \left(\left‖{x}^{k}-{x}_{0}-δx\right‖-\left‖{x}^{k}-{x}_{0}\right‖\right) - \left(\left‖{x}^{j}-{x}_{0}-δx\right‖-\left‖{x}^{j}-{x}_{0}\right‖\right) \\ = - \left(\frac{\left({x}^{k}-{x}_{0}\right)}{\left‖{x}^{k}-{x}_{0}\right‖}-\frac{\left({x}^{j}-{x}_{0}\right)}{\left‖{x}^{j}-{x}_{0}\right‖}\right) δ x \\ = - \left({1}^{k}-{1}^{j}\right) δ x\end{matrix}$ (13) where **1*^{k}*** and 1***^{j}*** are the estimated line-of-sight unit vectors directed from the initial estimate of the user position to the kth and *j*th satellites, respectively.

The set of K-1 linear equations can be written in matrix notation as $δ ∇ ρ = \left[\begin{matrix}δ ∇ {ρ}^{1 j} \\ δ ∇ {ρ}^{2 j} \\ ⋮ \\ δ ∇ {ρ}^{Kj}\end{matrix}\right] = \left[\begin{matrix}- {\left({1}^{1}-{1}^{j}\right)}^{T} \\ - {\left({1}^{2}-{1}^{j}\right)}^{T} \\ ⋮ \\ - {\left({1}^{K}-{1}^{j}\right)}^{T}\end{matrix}\right] δ x = G δx$ (14) where $G = \left[\begin{matrix}- {\left({1}^{1}-{1}^{j}\right)}^{T} \\ - {\left({1}^{2}-{1}^{j}\right)}^{T} \\ ⋮ \\ - {\left({1}^{K}-{1}^{j}\right)}^{T}\end{matrix}\right]$ (15) is a (*K* - 1 × 3) matrix characterizing the single differenced user-satellite geometry.

The least square solution for the correction to the initial estimates using the single differenced pseudorange measurements can be written as: $δ x = {\left({G}^{T}G\right)}^{- 1} {G}^{T} δ ∇ ρ$ (16) Similarly, the least square solution for the correction to the initial estimates using the single differenced carrier phase measurements can be written as: $δ x = {\left({G}^{T}G\right)}^{- 1} {G}^{T} λδ ∇ ϕ$ (17) Given **R_{∇*ρ*}** is the covariance matrix of the single differenced pseudorange measurement errors **v_{∇*ρ*}** and **R_{∇*ϕ*}** is the covariance matrix of the single differenced carrier phase measurement error **v_{∇ϕ}**, the estimated position error ***δ*x̂** can be modeled as: $δ \hat{x} = {\left({G}^{T}{{R}_{∇ ρ}}^{- 1}G\right)}^{- 1} {G}^{T} {{R}_{∇ ρ}}^{- 1} {v}_{∇ ρ}$ (18) and $δ \hat{x} = {\left({G}^{T}{{R}_{∇ ϕ}}^{- 1}G\right)}^{- 1} {G}^{T} {{R}_{∇ ϕ}}^{- 1} λ {v}_{∇ ϕ}$ (19)

Using equations 5 and 7, the single differenced pseudorange measurement error **v_{∇*ϕ*}** can be modeled as: ${v}_{∇ ρ} = ∇ {ρ}^{kj} - ∇ {r}^{kj} = ∇ {b}_{ρ}^{kj} + ∇ {ε}_{ρ}^{kj} = - c ∇ {dt}^{kj} + ∇ {I}^{kj} + ∇ {T}^{kj} + ∇ {ε}_{ρ}^{kj}$ (20) Using equations 6 and 8, the single differenced carrier phase measurement error **v_{∇*ϕ*}** can be modeled as ${v}_{∇ ϕ} = ∇ {ϕ}^{kj} - ∇ {r}^{kj} = ∇ {b}_{ϕ}^{kj} + \frac{1}{λ} ∇ {ε}_{ϕ}^{kj} = \frac{1}{λ} \left(-c∇{dt}^{kj}-∇{I}^{kj}+∇{T}^{kj}\right) + ∇ {N}^{kj} + \frac{1}{λ} ∇ {ε}_{ϕ}^{kj}$ (21)

The single differenced satellite orbit and clock, ionosphere delay, and troposphere delay can be further estimated and mitigated by using between-receiver differential GNSS or PPP techniques. The carrier phase ambiguity can then be estimated and resolved to an integer when the multipath error and noise are relatively small and well modeled in GNSS benign environments. In such cases, the position solutions can be precisely estimated with reliable error estimation based on the following equations. $δ \hat{x} = {\left({G}^{T}{{R}_{∇ Δ ρ}}^{- 1}G\right)}^{- 1} {G}^{T} {{R}_{∇ Δ ρ}}^{- 1} {v}_{∇ Δ ρ}$ (22) $δ \hat{x} = {\left({G}^{T}{{R}_{∇ Δ ϕ}}^{- 1}G\right)}^{- 1} {G}^{T} {{R}_{∇ Δ ϕ}}^{- 1} λ {v}_{∇ Δ ϕ}$ (23) where **R_{∇Δ*ρ*}** is the covariance matrix of the double differenced or corrected pseudorange measurement errors **v_{∇*ϕρ*}** and **R_{∇Δ*ϕ*}** is the covariance matrix of the double differenced or corrected carrier phase measurement error **v_{∇Δ*ϕ*}**. Equations 22 and 23 show how after-correction measurement errors propagate into the final position solutions and the effect of remaining measurement error on the final position solution is determined by satellite geometry reflected in **G** and measurement accuracy reflected in **R_{∇Δ*ρ*}** and **R_{∇Δ}*_{ϕ}.***

In harsh environments, GNSS measurements are further degraded by signal reflection, blockage, and deflection. These measurement errors are random, difficult to model, and often observed in multiple satellites, making them very difficult to estimate and mitigate. When these errors are not properly modeled in the GNSS positioning estimator, the estimator can output bad GNSS position solutions with unreliable position accuracy information. In this case, using a GNSS positioning solution can be problematic as the user may assume the estimated position is accurate while in reality it is not.

Several different approaches have been proposed to handle the multipath error and noise caused by signal degradations to provide more robust and reliable GNSS positions. On approach handles the signal diffraction and multipath error using an extended weight fading carrier-to-noise ratio-based model and uses robust estimation to remove outliers in the GPS phase data. Another approach has been to develop a fuzzy inference system to classify high-sensitivity GPS data in different environments based on satellite geometry and fading carrier-to-noise ratio information. Although both methods have demonstrated certain effectiveness for GPS outlier detection and data classification, the performance is limited because the fading carrier-to-noise ratio is not the direct measure of phase and pseudorange multipath error and can only provide the likelihood of multipath error.

Another approach uses the Receiver Autonomous Integrity Monitoring (RAIM) Fault Detection and Exclusion (FDE) algorithm to check the consistency of pseudorange residuals and eliminate the signals that have inconsistent residuals until the remaining residuals are consistent with each other at certain level. The algorithm then computes the position solutions using the remaining signals. However, RAIM may not be able to detect multipath and non-line-of-sight signals when multiple signals containing large multipath errors are received, which is not uncommon in harsh environments such as urban canyons. Another approach uses an upward-viewing infrared camera to identify the open sky and eliminate the satellites that are blocked by buildings. This method can exclude non-line-of-sight when calculating position solutions but cannot reliably detect the multipath. Another approach uses a ray-tracing algorithm on a three-dimensional (3D) building mode to detect and exclude multipath signals when calculating position solutions. Although this algorithm can improve position accuracy, it requires an accuracy building model and an initial user position estimate.

In summary, the current approaches to monitor or assess GNSS position solution quality and handle multipath errors to improve GNSS position estimates in harsh GNSS environments are subject to the following limitations. First, they require highly redundant measurements. Second, they do not provide a direct measure for multipath error. Third, they do not work well with multiple outliers. Fourth, they require additional information and data such as a carrier-to-noise ratio model, a 3D building model, an upward-viewing image, a high-resolution 3D map, etc.

In the following description, various examples will be described. For purposes of explanation, specific configurations and details are set forth in order to provide a thorough understanding of the examples. However, it will also be apparent to one skilled in the art that the example may be practiced without the specific details. Furthermore, well-known features may be omitted or simplified in order not to obscure the embodiments being described.

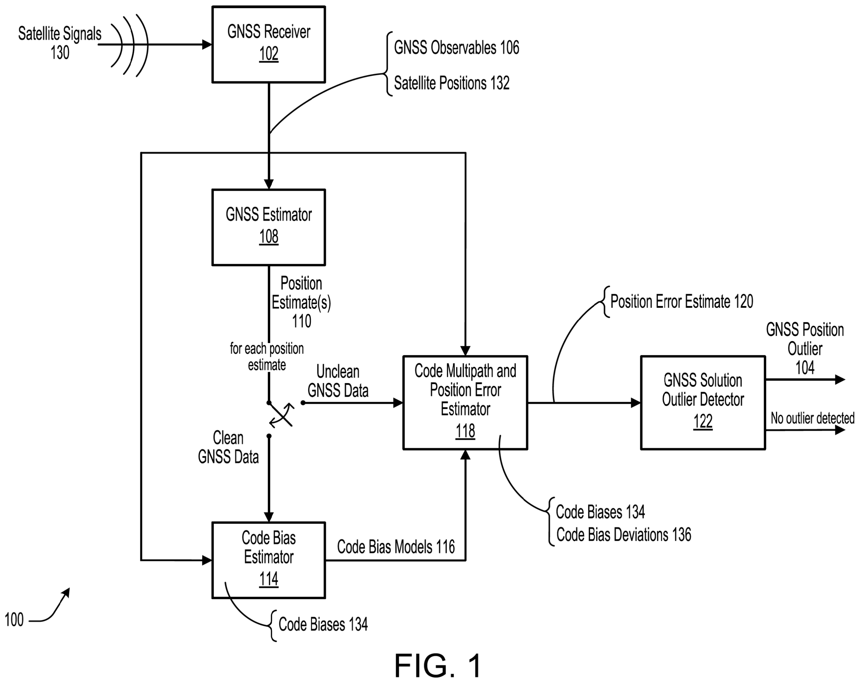

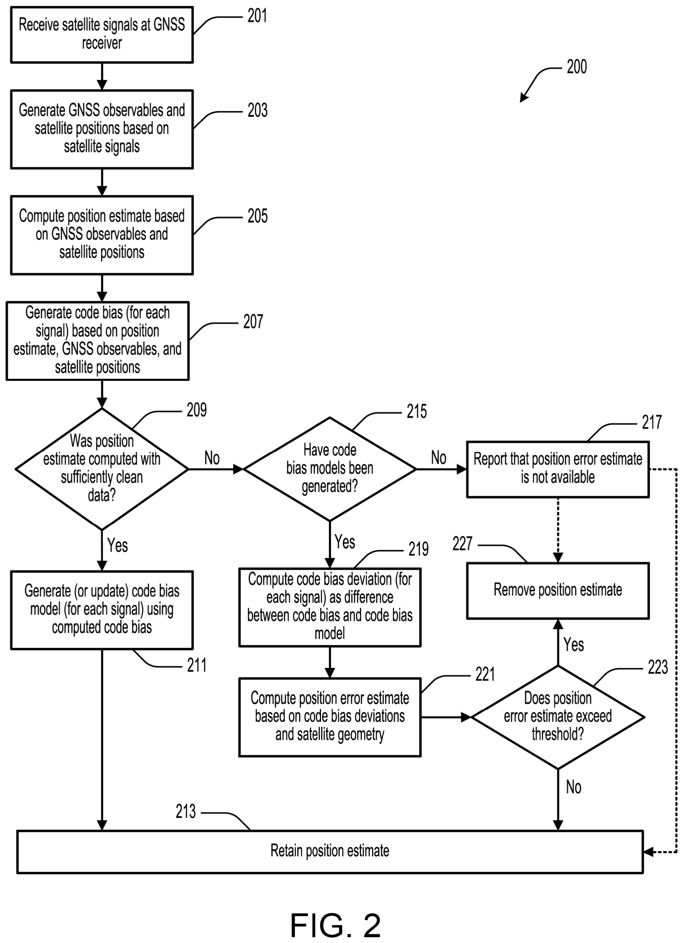

The figures herein follow a numbering convention in which the first digit or digits correspond to the figure number and the remaining digits identify an element or component in the figure. Similar elements or components between different figures may be identified by the use of similar digits. For example, 108 may reference element "08" in FIG. 1, and a similar element may be referenced as 208 in FIG. 2. As will be appreciated, elements shown in the various embodiments herein can be added, exchanged, and eliminated so as to provide a number of additional embodiments of the present disclosure. In addition, the proportion and the relative scale of the elements provided in the figures are intended to illustrate certain embodiments of the present disclosure and should not be taken in a limiting sense.

**FIG. 1** illustrates an example system 100 for detecting GNSS position outliers 104, in accordance with some embodiments of the present disclosure. System 100 includes a GNSS receiver 102 that receives satellite signals 130 from multiple satellites and measures a set of GNSS observables 106 based on the received signals. GNSS observables 106 may include carrier phase measurements, pseudorange measurements, or other GNSS measurements. In some examples, GNSS observables 106 are first processed and analyzed in a GNSS estimator 108, which computes one or more position estimates 110 for GNSS receiver 102. GNSS estimator 108 can use Single Point Positioning (SPP), DGNSS, PPP, or RTK engines to compute the receiver position.

System 100 may then determine whether the GNSS data (including GNSS observables 106 and position estimate 110) is sufficiently clean. This determination relates to whether the GNSS data is free from significant errors, distortions, or anomalies that are contributed by multipath and signal degradation from the surrounding environments and could compromise its accuracy and reliability. This determination may be made based on one or more of (1) the number of satellites for which GNSS observables 106 were measured, (2) the signal-to-noise ratio (SNR) of satellite signals 130 as received by GNSS receiver 102, (3) the particular positioning engine (e.g., RTK engine or DGNSS engine) that generated position estimate 110, (4) a solution status outputted by the particular positioning engine that generated position estimate 110, (5) an upward-viewing image captured at GNSS receiver 102, among other possibilities. In some examples, determining whether the GNSS data is sufficiently clean may include determining whether GNSS observables 106 were collected in an open sky environment or in a harsh GNSS environment.

If the GNSS data is determined to be sufficiently clean, both GNSS observables 106 and position estimate 110 are processed in a code bias estimator 114, which computes a code bias for each satellite's major signal, resulting in a set of code biases 134. Once the number of computed code biases 134 per satellite exceeds certain amounts, code bias models 116 are generated for the different satellites using a least squares polynomial fitting method. If the GNSS data is determined to be significantly affected by the signal degradation environment (and is therefore unclean) and code bias models 116 are available, both GNSS observables 106 and position estimates 110 are processed in a code multipath and position error estimator 118, which computes a position error estimate 120 based on a difference between code biases 134 and code bias models 116 (the difference being code bias deviations 136).

A GNSS solution outlier detector 122 can compare position error estimate 120 with the threshold given by the user to either (1) detect a GNSS position outlier 104 (e.g., if position error estimate 120 is greater than the threshold) and mark the corresponding position estimate as an outlier or (2) determine that no position outlier was detected (e.g., if position error estimate 120 is less than the threshold). In some examples, code multipath and position error estimator 118 optionally computes a code multipath error estimate based on position error estimate 120 and code bias deviations 136.

In some embodiments, code bias estimator 114 processes GNSS observables 106 and position estimate 110 computed from GNSS estimator 108 to compute the code biases of each satellite's major signal, i.e., L1 for GPS, GLONASS, QZSS, E1 Galileo, and B1C for BeiDou. The GNSS pseudorange or code observable from the kth satellite *ρ^{k}* can be modeled as: ${ρ}^{k} = {r}^{k} + c \left(dT-{dt}^{k}\right) + {b}^{k} + {ε}_{ρ}^{k}$ (24) where *r^{k}* is the user-to-satellite LOS range, *dT* is the receiver clock offset, *dt^{k}* is the modeled satellite clock error, *b^{k}* is the remaining errors in satellite clocks, ionosphere delay, troposphere delay, etc., and ${ε}_{ρ}^{k}$ is the code multipath and noise.

Equation (24) can be rewritten and the remaining errors hereinafter referred to as code bias can be computed as follows: ${b}^{k} = {ρ}^{k} - {r}^{k} - c \left(dT-{dt}^{k}\right) + {ε}_{ρ}^{k}$ (25) The user-to-satellite LOS range can be computed using equation (9) where the receiver position is provided by the position estimator and the satellite position is computed using GNSS ephemeris. The estimated receiver clock offset is provided by the position estimator, and the modeled satellite clock error is computed using GNSS ephemeris.

In open-sky areas, ${ε}_{ρ}^{k}$ is small and mostly contributed to by random noise with Gaussian distribution. The errors of the estimated user-to-satellite LOS range and receiver clock offset are projected by the position error from the uncorrected ionosphere and troposphere delay. In this case, the code bias contains the remaining errors in satellite clocks, ionosphere delay, and troposphere delay which changes slowly over time.

In GNSS harsh environments, the code bias can be computed as: ${b}^{k} = {ρ}^{k} - \left({r}^{k}+{δr}^{k}\right) - c \left(dT-{dt}^{k}\right) + {ε}_{ρ}^{k}$ (27) where *δr^{k}* is the user-to-*k*th satellite LOS range error projected by the position error. In this case the difference between the computed code bias and the code bias model (or expected code bias), hereafter called code bias deviation *δb^{k}* for the satellite *k,* can be computed as: $\begin{matrix}{δb}^{k} = {b}^{k} - {b}_{m}^{k} \\ = {ρ}^{k} - \left({r}^{k}+{δr}^{k}\right) - c \left(dT-{dt}^{k}\right) + {ε}_{ρ}^{k} - {ρ}^{k} + {r}^{k} + c \left(dT-{dt}^{k}\right) \\ = {ε}_{ρ}^{k} - {δr}^{k}\end{matrix}$ (28) The LOS range error for the satellite *k* can be converted by the receiver position error ***δ*x** using the following equation: ${δr}^{k} = \frac{\left({x}^{k}-x\right)}{\left‖{x}^{k}-X\right‖} δx = {\left({1}^{k}\right)}^{T} δx$ (29) where **x***^{k}* is the position of the satellite *k,* **x** is the receiver position, and **1*^{k}*** is the LOS unit vector.

Combining equation (28) and (29), the code bias deviation for every satellite can be modeled as: $δb = \left[\begin{matrix}{δb}^{1} \\ ⋮ \\ {δb}^{n - 1} \\ {δb}^{n}\end{matrix}\right] = \left[\begin{matrix}{ε}_{ρ}^{1} - {δr}^{1} \\ ⋮ \\ {ε}_{ρ}^{n - 1} - {δr}^{n - 1} \\ {ε}_{ρ}^{n} - {δr}^{n}\end{matrix}\right] = \left[\begin{matrix}{ε}_{ρ}^{1} \\ ⋮ \\ {ε}_{ρ}^{n - 1} \\ {ε}_{ρ}^{n}\end{matrix}\right] - \left[\begin{matrix}{\left({1}^{1}\right)}^{T} \\ ⋮ \\ {\left({1}^{n - 1}\right)}^{T} \\ {\left({1}^{n}\right)}^{T}\end{matrix}\right] δx = {ϵ}_{ρ} + Gδ x$ (30) where $G = - \left[\begin{matrix}{\left({1}^{1}\right)}^{T} \\ ⋮ \\ {\left({1}^{n - 1}\right)}^{T} \\ {\left({1}^{n}\right)}^{T}\end{matrix}\right]$ For the satellites with very small multipath error that can be ignored, which may be referred to as good satellites, one can rewrite the equation (30) as: ${δb}^{g} = \left[\begin{matrix}{δb}^{{g}_{1}} \\ ⋮ \\ {δb}^{{g}_{m - 1}} \\ {δb}^{{g}_{m}}\end{matrix}\right] = \left[\begin{matrix}- δ {\hat{r}}^{{g}_{1}} \\ ⋮ \\ - δ {\hat{r}}^{{g}_{m - 1}} \\ - δ {\hat{r}}^{{gi}_{m}}\end{matrix}\right] = - \left[\begin{matrix}{\left({1}^{{g}_{1}}\right)}^{T} \\ ⋮ \\ {\left({1}^{{g}_{m - 1}}\right)}^{T} \\ {\left({1}^{{g}_{m}}\right)}^{T}\end{matrix}\right] δ {\hat{x}}^{b} = {G}_{g} δ {\hat{x}}^{g}$ (31) where *δb^{gₘ}* is the code bias deviation for the good satellite-m, **δx̂*^{g}*** is the receiver position error estimated by the good satellites, and $G = - \left[\begin{matrix}{\left({1}^{{g}_{1}}\right)}^{T} \\ ⋮ \\ {\left({1}^{{g}_{m - 1}}\right)}^{T} \\ {\left({1}^{{g}_{m}}\right)}^{T}\end{matrix}\right]$ is the design matrix of the good satellites.

The least square solution of **δx̂*^{g}*** can be computed using the following equation: $δ {\hat{x}}^{g} = {\left({{G}_{g}}^{T}{G}_{g}\right)}^{- 1} {{G}_{g}}^{T} δ {b}^{g}$ (32) Since the code bias deviation of a good satellite is equal to the LOS range error, its magnitude is proportional to the magnitude of the receiver position error **δx̂*^{g}*** and can be computed using the following equation: $\left|{δb}^{{g}_{k}}\right| = \left‖δ{\hat{x}}^{g}\right‖ cos \left({θ}^{k}\right)$ (33) where *θ^{k}* is the angle between the receiver position error vector and the LOS vector for this satellite.

Therefore, the magnitude of the code bias deviation for a good satellite should be equal to or smaller than the magnitude of the receiver position error. One can then identify a good satellite when its magnitude of the code bias deviation is less than the expected single point CA-code based positioning error in good GNSS environments such as 3 meters. If the number of the identified good satellites *m >=* 3, one can compute *C*(*m,* 3) position error estimates using equation (32) and get a set of **δx̂*^{g}*,** denoted as $Δ {\hat{X}}^{g} = \left\{δ{\hat{x}}_{1}^{g},δ{\hat{x}}_{2}^{g},…,δ{\hat{x}}_{C \left(m, 3\right)}^{g}\right\}$ , where $C \left(m, 3\right) = \frac{m !}{3 ! \left(m-3\right) !}$.

Since each **δx̂*^{g}*** is estimated using 3 good satellites, each position error estimate in **ΔX̂*^{g}*** should be close to each other. However, there might be the corner case where a bad satellite is identified as a good satellite when the signs of the position error introduced LOS range error, and the multipath error of this satellite are opposite, and they are canceled in equation (30), resulting in a small code bias deviation value. In this case any **δx̂*^{g}*** that is estimated with this bad satellite will be separated from other **δx̂*^{g}*** that use all 3 good satellites. To find out if there is any **δx̂*^{g}*** that is estimated with the bad satellite, one can use a clustering technique, such as Density-Based Spatial Clustering of Applications with Noise (DBSCAN) to find the cluster with the largest number of the position error estimates, denoted as $Δ {\hat{X}}^{c} = \left\{δ{\hat{x}}_{1}^{c},δ{\hat{x}}_{2}^{c},…,δ{\hat{x}}_{C}^{c}\right\}$ where *C* is the total number of position error estimates in the cluster. One can then compute the best estimate of the receiver position error as the average of the position error estimates in **ΔX̂*^{c}*** as shown below. $δ \hat{x} = \frac{1}{C} {\sum }_{i = 1}^{C} δ {\hat{x}}_{i}^{c}$ (34) The larger the *C*, the more redundancy of the estimates, and the more accurate the final position error estimate will be.

When the number of the identified good satellites *m* < 3, the code bias deviations from all satellites are used to estimate the least square position error. First, the satellite with a satellite elevation larger than a certain threshold is used as the base satellite and its multipath error is assumed to be ignorable. Doing so, the following is obtained: ${δb}^{b} = - {δr}^{b} = - {\left({1}^{b}\right)}^{T} δ {\hat{x}}^{b}$ (35) where *δb^{b}* is the code bias deviation for the base satellite-b which represents the LOS range error projected from **δx̂*^{b}***, the receiver position error estimated by the base satellites.

Then one can project the LOS range error from the base satellite-b to the satellite-*k* using the following equation. ${δr}^{k} = \left({1}^{b}⋅{1}^{k}\right) {δr}^{b} = - \left({1}^{b}⋅{1}^{k}\right) {δb}^{b}$ (36) Rewriting equation (30), the following is obtained: $δ b - {ϵ}_{ρ} = \left[\begin{matrix}{δb}^{1} - {ε}_{ρ}^{1} \\ ⋮ \\ {δb}^{n - 1} - {ε}_{ρ}^{n - 1} \\ {δb}^{n} - {ε}_{ρ}^{n}\end{matrix}\right] = δ r = \left[\begin{matrix}{δr}^{1} \\ ⋮ \\ {δr}^{n - 1} \\ {δr}^{n}\end{matrix}\right] = - \left[\begin{matrix}{\left({1}^{1}\right)}^{T} \\ ⋮ \\ {\left({1}^{n - 1}\right)}^{T} \\ {\left({1}^{n}\right)}^{T}\end{matrix}\right] δ \hat{x} = Gδ \hat{x}$ (37)

The least square position error estimate can be obtained from the following equation. $δ \hat{x} = {\left({G}^{T}{{R}_{{ϵ}_{ρ}}}^{- 1}G\right)}^{- 1} {G}^{T} {{R}_{{ϵ}_{ρ}}}^{- 1} δr$ (38) where ${R}_{{ϵ}_{ρ}} = \left[\begin{matrix}{R}_{{ϵ}_{{ρ}_{1}}} & … & 0 \\ ⋮ & ⋱ & ⋮ \\ 0 & … & {R}_{{ϵ}_{{ρ}_{n}}}\end{matrix}\right]$ ${R}_{{ϵ}_{{ρ}_{k}}}$ is the multipath error covariances of satellite-k which is modeled by the following equation. ${R}_{{ϵ}_{{ρ}_{k}}} = {\left({δb}^{k}-{δr}^{k}\right)}^{2}$

When there are multiple satellites with elevations higher than the threshold, each of these satellites can be selected as base satellites and multiple least square position error estimates can be obtained, denoted as: $Δ {\hat{X}}^{b} = \left\{δ{\hat{x}}_{1}^{b},δ{\hat{x}}_{2}^{b},…,δ{\hat{x}}_{B}^{b}\right\}$ where *B* is the total number of base satellites. The best estimate of the receiver position error can then be computed as the average of the position error estimates in **δX̂*^{g}*** as shown below. $δ \hat{x} = \frac{1}{B} {\sum }_{i = 1}^{B} δ {\hat{x}}_{i}^{b}$ (39)

**FIG. 2** illustrates an example method 200 of detecting GNSS position outliers, in accordance with some embodiments of the present disclosure. Alternatively or additionally, method 200 may be considered a method of determining an error associated with a satellite-determined position. Steps of method 200 may be performed in any order and/or in parallel, and one or more steps of method 200 may be optionally performed.

At step 201, the method begins by receiving, at a GNSS receiver, a set of satellite signals transmitted from a set of satellites.

At step 203, GNSS observables and satellite positions are generated based on the received satellite signals. These GNSS observables may include pseudoranges, carrier phase measurements, and other GNSS data used for determining the position of the GNSS receiver. The satellite positions may be derived from ephemeris data included in the satellite signals.

At step 205, a position estimate for the GNSS receiver is computed using the generated GNSS observables and the satellite positions. A GNSS estimator may compute the position estimate using one of several positioning engines, such as an SPP, DGNSS, PPP, or RTK positioning engine.

At step 207, a set of code biases for the received satellite signals are generated based on the position estimate, the GNSS observables, and the satellite positions. These code biases can represent the differences between the measured and expected signal delays, accounting for factors such as ionospheric and tropospheric effects, as well as hardware-induced delays.

At step 209, it is determined whether the position estimate was computed using sufficiently clean data. In other words, it is determined whether the GNSS observables used to compute the position estimate were sufficiently clean. In some examples, it may be determined that the position estimate was computed using sufficiently clean data if the position estimator outputs a fixed RTK position using an RTK positioning engine. In some examples, it may be determined that the position estimate was not computed using sufficiently clean data if the position estimator only uses a few satellites in the positioning engine. If it is determined, at step 209, that the position estimate was computed using the sufficiently clean data, method 200 proceeds to step 211. Otherwise, method 200 proceeds to step 215.

At step 211, a set of code bias models for the received signals are generated or updated using the generated code biases.

At step 213, the position estimate computed at step 205 is retained. In various examples, step 213 may include forwarding the position estimate to a downstream application, sending a status signal indicating that the position estimate can be used in a downstream application, adding the position estimate to a set of time-sequenced position estimates, among other possibilities.

At step 215, it is determined whether the set of code bias models have been generated. If it is determined that the code bias models have been generated, method 200 proceeds to step 219. Otherwise, method 200 proceeds to step 217.

At step 217, it is reported that a position error estimate is not available. After step 227 is performed, method 200 may proceed to step 227 or step 213, based on user preference.

At step 219, a set of code bias deviations are computed as the difference between the set of code biases and the set of code bias models.

At step 221, a position error estimate is computed based on the set of code bias deviations and satellite geometry. This estimate quantifies the likely error in the position estimate derived at step 205, providing a metric for assessing the accuracy of the computed position. In some examples, the position error estimate is computed by mathematically combining the set of code bias deviations. In some examples, a signal-specific position error estimate may be computed for a single signal using that signal's code bias deviation, and the resulting set of signal-specific position error estimates may be combined (e.g., using clustering) to obtain the position error estimate.

At step 223, it is determined whether the position error estimate exceeds a threshold. If it is determined that the position error estimate exceeds the threshold, method 200 proceeds to step 227. Otherwise, method 200 proceeds to step 213.

At step 227, the position estimate computed at step 205 is removed. In various examples, step 213 may include not forwarding the position estimate to a downstream application, sending a status signal indicating that the position estimate cannot be used in a downstream application, removing the position estimate from a set of time-sequenced position estimates used or outputted by the GNSS receiver, deleting the position estimate from a memory, among other possibilities.

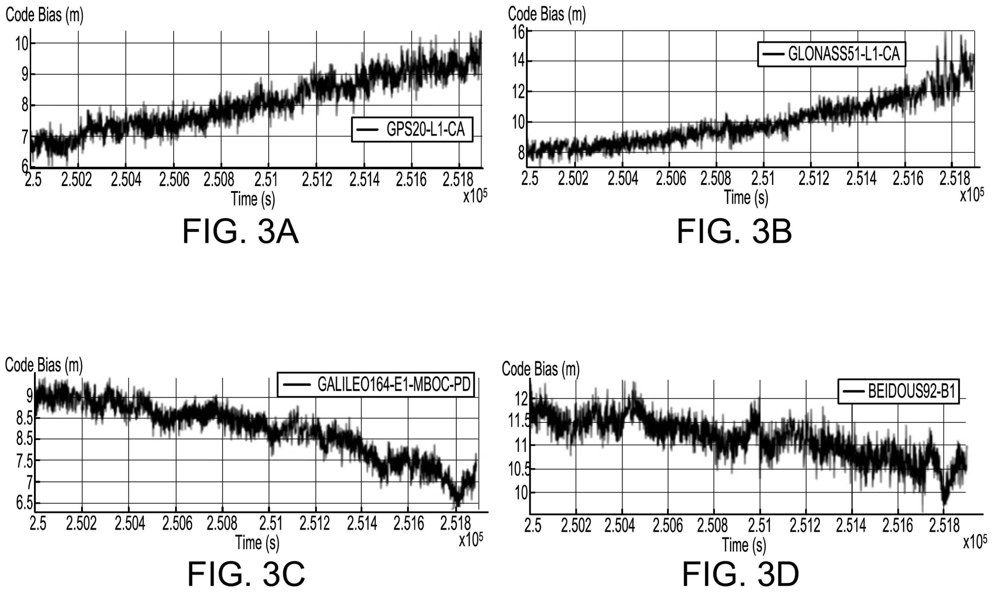

**FIGS. 3A-3D** illustrate examples of the computed code bias for different satellites when using an RTK engine as the position estimator for data captured in an open-sky environment, in accordance with some embodiments of the present disclosure. As the code bias changes slowly over time, it can be modeled by a second order polynomial expressed by the following equation: ${b}_{m}^{k} = {a}_{2}^{k} {t}^{2} + {a}_{0}^{k} t + {a}_{0}^{k}$ (26) where ${a}_{0}^{k} , {a}_{1}^{k}$, and ${a}_{2}^{k}$ are the code bias model coefficients for satellite *k,* t is GPS time and ${b}_{m}^{k}$ is the expected code bias for satellite *k* computed by the model. A least squares polynomial fitting method can then be used to best fit the data in the least-squares sense.

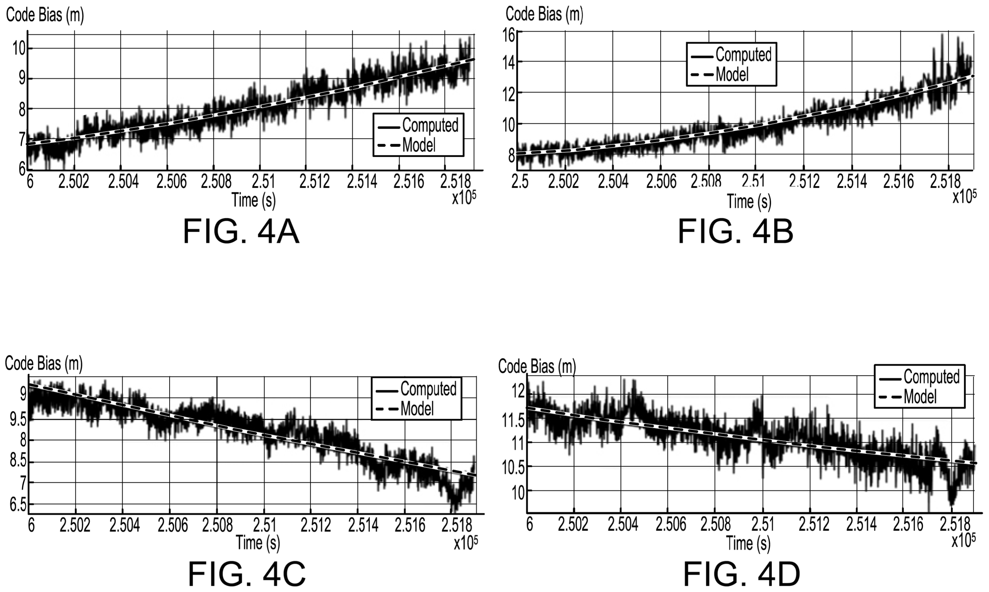

**FIGS. 4A-4D** illustrate examples of the code bias model for different satellites using a least squares polynomial fitting method, in accordance with some embodiments of the present disclosure. It can be observed that the data can be properly fit by the model and the deviation between the computed code bias and model is mainly contributed by random noise within a magnitude of approximately 1 meter.

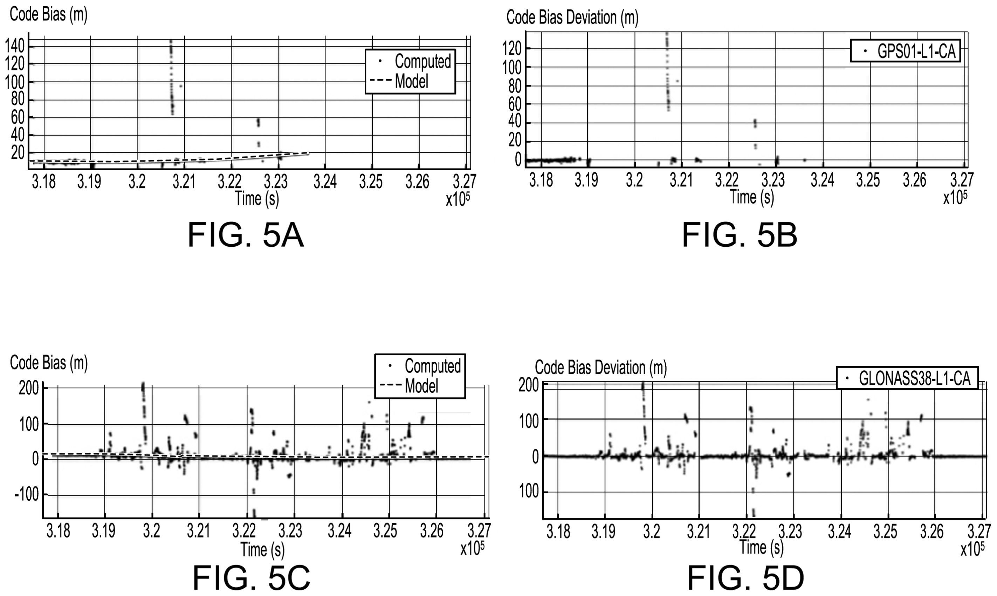

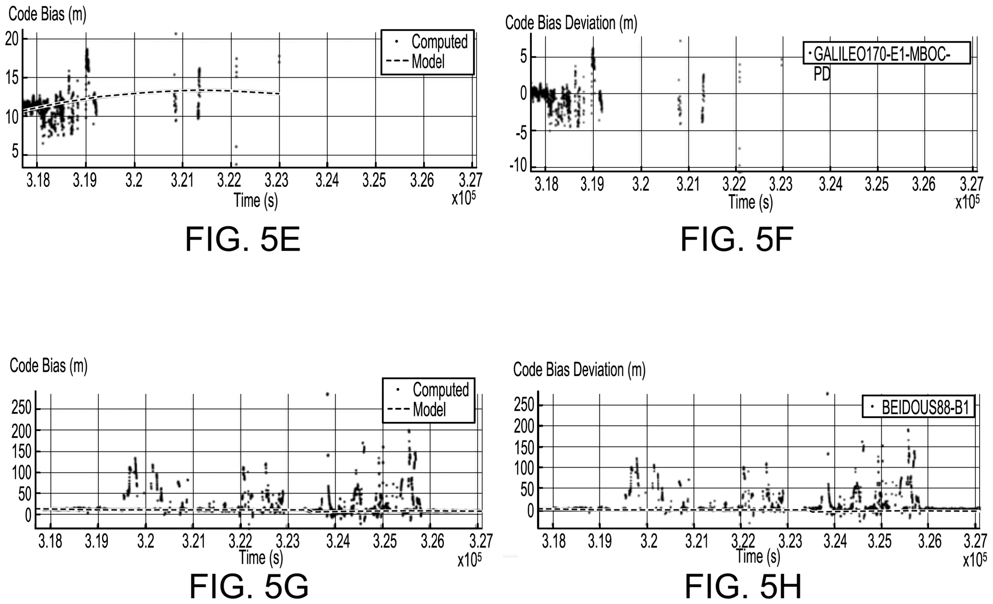

**FIGS. 5A-5H** illustrate examples of the computed code bias, code bias model, and code bias deviation for different satellites from a test conducted in urban areas, in accordance with some embodiments of the present disclosure. During the test, a vehicle starts at an open-sky area and then enters a core downtown area with severe multipath and signal degradation environments, and then finally returns to an open-sky area. It can be observed that the code bias model has been properly computed and fitted with the identified open-sky data and some large code bias deviations are observed in the core downtown area.

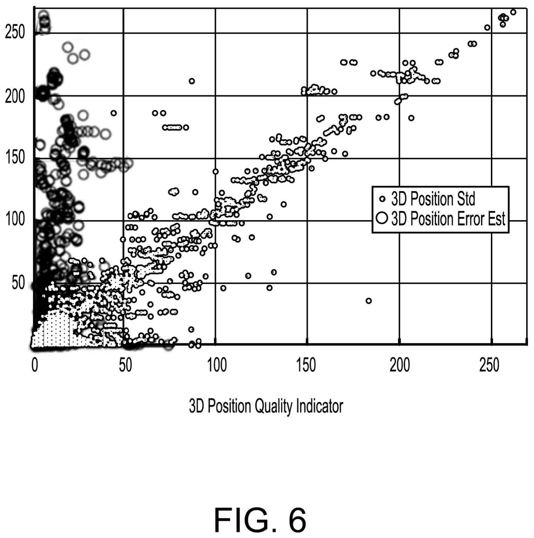

**FIG. 6** illustrates the true position error versus position standard deviation output by the GNSS estimator and position error estimates generated by the described method using the code bias deviations for the urban area data, in accordance with some embodiments of the present disclosure. The true position is provided by a highly precise GNSS/INS reference system. It can be seen that the position standard deviation outputs from the GNSS estimator do not properly reflect the true position error, i.e., large position error can occur with small position standard deviation. On the contrary, the position error estimates computed by the described method have shown strong correlation to the true position error and can reliably indicate the position error.

To detect GNSS solution outliers, one approach is to compare the magnitude of position error estimates generated by the described method with a position error threshold of outliers defined by the user based on the following If-Then statement: If **∥δx̂∥** > *Pₒ*, then this solution is an outlier with position error larger than *Pₒ*.

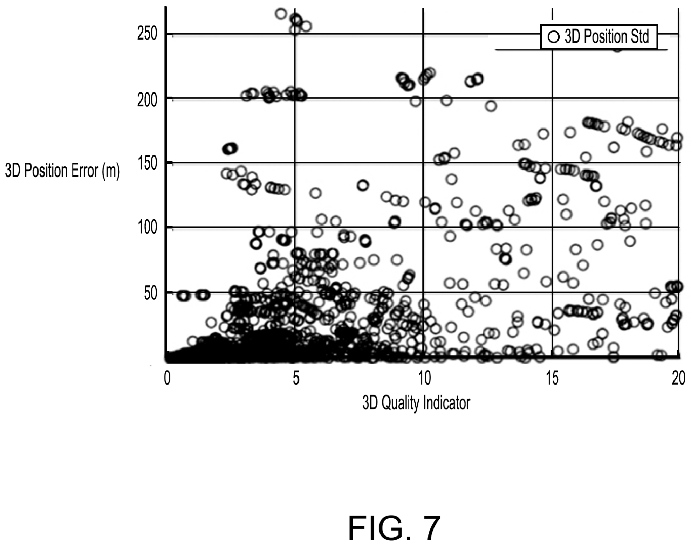

**FIG. 7** illustrates an example of using the true position error versus position standard deviation output by the GNSS estimator for outlier detection in urban areas, in accordance with some embodiments of the present disclosure. Using a 20 meter threshold for outlier detection, it can be seen that there are many position solutions with errors larger than the 20 meters threshold when using the position standard deviation outputted from the GNSS estimator to detect outliers.

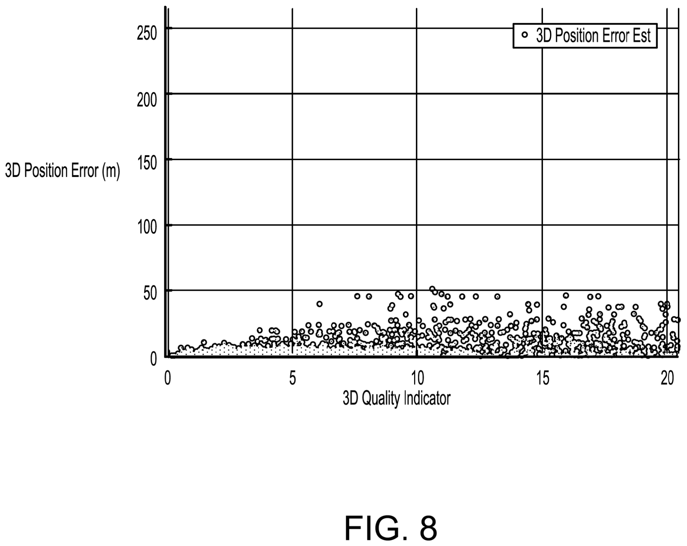

**FIG. 8** illustrates an example of using the true position error versus position error estimates generated by the described method using the code bias deviations for outlier detection in urban areas, in accordance with some embodiments of the present disclosure. Using a 20 meter threshold for outlier detection, it can be seen that most of the position solutions have errors within the 20 meters threshold when using the described position error estimates for outlier detection. This demonstrates the effectiveness of the described method. In some cases, the position error estimates generated by the invented method can also be used to provide reliable position precision information for GNSS quality control and position error modeling in multi-sensor fusion.

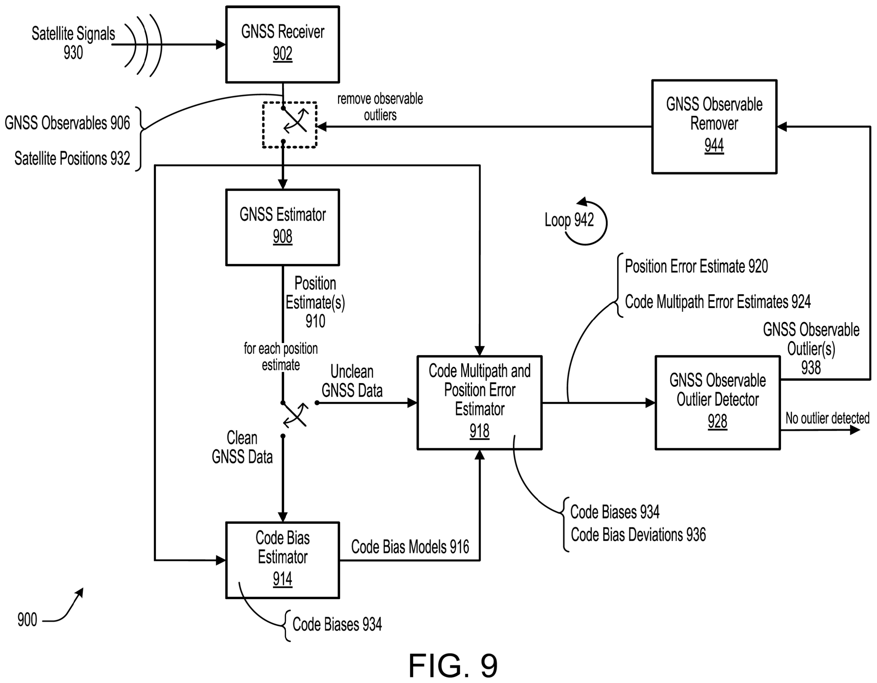

**FIG. 9** illustrates an example system 900 for detecting and removing GNSS observable outliers 938, in accordance with some embodiments of the present disclosure. System 900 includes a GNSS receiver 902 that receives satellite signals 930 from multiple satellites and measures a set of GNSS observables 906 based on the received signals. GNSS observables 906 may include carrier phase measurements, pseudorange measurements, or other GNSS measurements. In some examples, GNSS observables 906 are first processed and analyzed in a GNSS estimator 908, which computes one or more position estimates 910 for GNSS receiver 902. GNSS estimator 908 can use SPP, DGNSS, PPP, or RTK engines to compute the receiver position.

System 900 may then determine whether the GNSS data (including GNSS observables 906 and position estimate 910) is sufficiently clean. This determination relates to whether the GNSS data is free from significant errors, distortions, or anomalies that are caused by signal degradation and/or multipath. This determination may be made based on one or more of (1) the number of satellites for which GNSS observables 906 were measured, (2) the signal-to-noise ratio (SNR) of satellite signals 930 as received by GNSS receiver 902, (3) the particular positioning engine (e.g., RTK engine) that generated position estimate 910, (4) a solution status outputted by the particular positioning engine that generated position estimate 910, (5) an upward-viewing image captured at GNSS receiver 902, among other possibilities. In some examples, determining whether the GNSS data is sufficiently clean may include determining whether GNSS observables 906 were collected in an open sky environment or in a harsh GNSS environment.

If the GNSS data is determined to be sufficiently clean, both GNSS observables 906 and position estimate 910 are processed in a code bias estimator 914, which computes a code bias for each satellite's major signal, resulting in a set of code biases 934. Once the number of computed code biases 934 per satellite exceeds certain amounts, code bias models 916 are generated for the different satellites using a least squares polynomial fitting method. If the GNSS data is determined to be significantly affected by the signal degradation environment (and is therefore unclean) and code bias models 916 are available, both GNSS observables 906 and position estimates 910 are processed in a code multipath and position error estimator 918, which computes a position error estimate 920 based on a difference between code biases 934 and code bias models 916 (the difference being code bias deviations 936).

In some examples, once position error estimate 920 is computed using either equation (34) or (39), code multipath and position error estimator 918 computes a code multipath error estimate 124 for each satellite by rewriting equation (30) as: ${\hat{ϵ}}_{ρ} = δb - Gδ \hat{x}$ (40) As the accuracy of the code multipath error estimate is correlated with the accuracy of the estimated position error, it might not be reliable to only use a fixed value code multipath error threshold for GNSS observable outlier detection, especially when the estimated position error has biases. Thus, in some examples, a statistical measurement such as a Z-score or standard score is used to identify outliers in the code multipath error estimates of all satellites as follows: ${Z}_{j} = \frac{{\hat{ε}}_{ρ}^{j} - {μ}_{{\hat{ϵ}}_{ρ}}}{{σ}_{{\hat{ϵ}}_{ρ}}}$ (41) where *Zⱼ* is the Z-Score of the code multipath error estimate for the jth satellite, and *µ_{ε̂_{ρ}}* and *σ_{ε̂_{ρ}}* are the mean and standard deviation of the code multipath error estimate for all satellites. If a Z-score for a particular code multipath error estimate is larger than the threshold defined by the user (e.g., 3), the particular code multipath error estimate is determined to be an outlier, a GNSS observable outlier 938 is detected, and the corresponding GNSS observable from GNSS observables 906 is marked as an outlier.

The process can go through each satellite or satellite signal and once all GNSS observable outliers 938 are identified, a GNSS observable remover 944 removes the corresponding GNSS observables from GNSS observables 906. This completes the first iteration through loop 942. During the second iteration through loop 942 (as well as each subsequent iterations through loop 942, if any), GNSS estimator 908 recomputes position estimate 910 without using the data from GNSS observable outlier(s) 938. Code multipath and position error estimator 918 will then compute a new position error estimate 920 and new code multipath error estimates 924 for the same epoch. The process will repeat until no multipath outliers are identified or the number of clean observables to process is less than a particular number (e.g., 5).

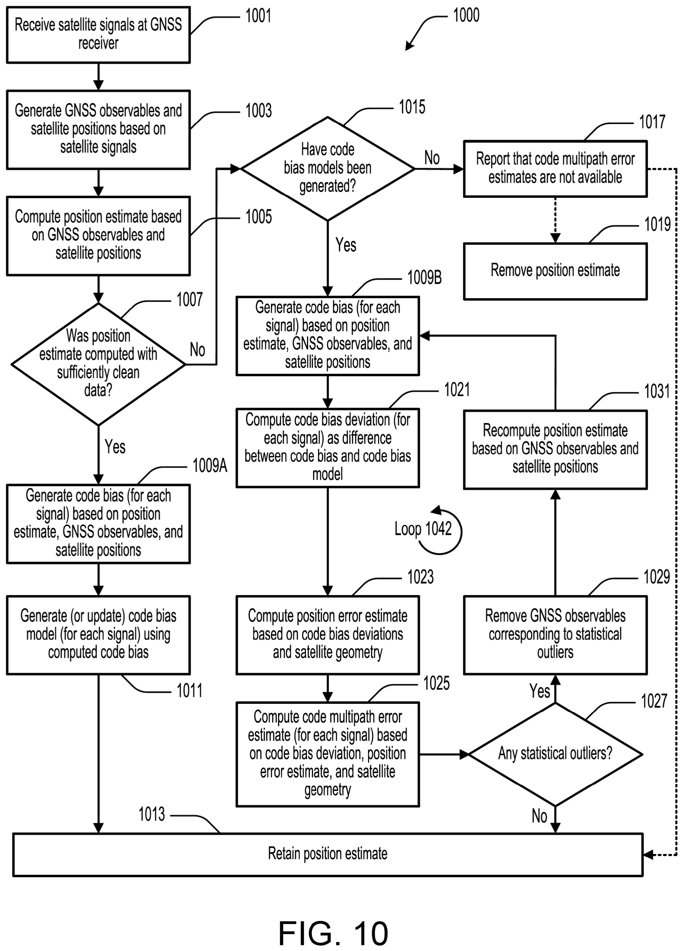

**FIG. 10** illustrates an example method 1000 of detecting and removing GNSS observable outliers, in accordance with some embodiments of the present disclosure. Alternatively or additionally, method 1000 may be considered a method of determining an error associated with a satellite-determined position. Steps of method 1000 may be performed in any order and/or in parallel, and one or more steps of method 1000 may be optionally performed.

At step 1001, the method begins by receiving, at a GNSS receiver, a set of satellite signals transmitted from a set of satellites.

At step 1003, GNSS observables and satellite positions are generated based on the received satellite signals. These GNSS observables may include pseudoranges, carrier phase measurements, and other GNSS data used for determining the position of the GNSS receiver. The satellite positions may be derived from ephemeris data included in the satellite signals.

At step 1005, a position estimate for the GNSS receiver is computed using the generated GNSS observables and the satellite positions. A GNSS estimator may compute the position estimate using one of several positioning engines, such as an SPP, DGNSS, PPP, or RTK positioning engine.

At step 1007, it is determined whether the position estimate was computed using sufficiently clean data. In other words, it is determined whether the GNSS observables used to compute the position estimate were sufficiently clean. In some examples, it may be determined that the position estimate was computed using sufficiently clean data if the position estimator outputs a fixed RTK position using an RTK positioning engine. In some examples, it may be determined that the position estimate was not computed using sufficiently clean data if the position estimator only uses a few satellites in the positioning engine. If it is determined, at step 1007, that the position estimate was computed using the sufficiently clean data, method 1000 proceeds to step 1009A. Otherwise, method 1000 proceeds to step 1015.

At step 1009A, a set of code biases for the received satellite signals are generated based on the position estimate, the GNSS observables, and the satellite positions. These code biases can represent the differences between the measured and expected signal delays, accounting for factors such as ionospheric and tropospheric effects, as well as hardware-induced delays.

At step 1011, a set of code bias models for the received signals are generated or updated using the set of code biases generated at step 1009A.

At step 1013, the position estimate computed at step 1005 is retained. In various examples, step 1013 may include forwarding the position estimate to a downstream application, sending a status signal indicating that the position estimate can be used in a downstream application, adding the position estimate to a set of time-sequenced position estimates, among other possibilities.

At step 1015, it is determined whether the set of code bias models have been generated. If it is determined that the code bias models have been generated, method 1000 proceeds to step 1009B. Otherwise, method 1000 proceeds to step 1017.

At step 1017, it is reported that code multipath error estimates are not available. After step 1027 is performed, method 1000 may proceed to step 1013 or step 1019, based on user preference
At step 1019, the position estimate computed at step 1005 is removed. In various examples, step 1019 may include not forwarding the position estimate to a downstream application, sending a status signal indicating that the position estimate cannot be used in a downstream application, removing the position estimate from a set of time-sequenced position estimates used or outputted by the GNSS receiver, deleting the position estimate from a memory, among other possibilities.

At step 1009B, a set of code biases for the received satellite signals are generated based on the position estimate, the GNSS observables, and the satellite positions.

At step 1021, a set of code bias deviations are computed as the difference between the set of code biases generated at step 1009B and the set of code bias models.

At step 1023, a position error estimate is computed based on the set of code bias deviations and satellite geometry. This estimate quantifies the likely error in the position estimate derived at step 1005 (or step 1031 for a second iteration and subsequent iterations through loop 1042), providing a metric for assessing the accuracy of the computed position. In some examples, the position error estimate is computed by mathematically combining the set of code bias deviations. In some examples, a signal-specific position error estimate may be computed for a single signal using that signal's code bias deviation, and the resulting set of signal-specific position error estimates may be combined (e.g., using clustering) to obtain the position error estimate.

At step 1025, a set of code multipath error estimates are computed based on the set of code bias deviations, the position error estimate, and the satellite geometry.

At step 1027, it is determined whether any of the set of code multipath error estimates are statistical outliers with respect to each other. If none of the set of code multipath error estimates are statistical outliers, method 1000 proceeds to step 1013. If at least one of the set of code multipath error estimates is a statistical outlier, method 1000 proceeds to step 1029 when the number of clean observables is greater than the minimum requirement for positioning or method 1000 proceeds to step 1013 when the number of clean observables is less than the minimum requirement for positioning.

At step 1029, for each statistical outlier identified at step 1027, the corresponding GNSS observable is removed from the set of GNSS observables previously used by the positioning engine to compute the position estimate.

At step 1031, a new position estimate for the GNSS receiver is computed using the remaining GNSS observables (after removing one or more GNSS observables at step 1029) and the satellite positions. After performing step 1031, method 1000 proceeds to step 1009B to generate a new set of code biases for the received satellite signals based on the new position estimate, the GNSS observables (after removing one or more GNSS observables at step 1029), and the satellite positions. After performing step 1009B, method 1000 proceeds to step 1021 to compute a new set of code bias deviations as the difference between the new set of code biases and the set of code bias models. After performing step 1021, method 1000 proceeds to step 1023 to compute a new position error estimate based on the new set of code bias deviations and the satellite geometry. After performing step 1023, method 1000 proceeds to step 1025 to compute a new set of code multipath error estimates based on the new set of code bias deviations, the new position error estimate, and the satellite geometry. After performing step 1025, method 1000 proceeds to step 1027 to determine whether any of the new set of code multipath error estimates are statistical outliers with respect to each other. If none of the new set of code multipath error estimates are statistical outliers, method 1000 proceeds to step 1013. If at least one of the new set of code multipath error estimates is a statistical outlier, method 1000 proceeds to step 1029 when the number of clean observables is greater than the minimum requirement for positioning or proceeds to step 1013 when the number of clean observables is less than the minimum requirement for positioning. Accordingly, method 1000 may iterate through loop 1042 one or more times until no statistical outliers are detected or until it is determined that the number of clean observables is less than the minimum requirement for positioning at step 1027.

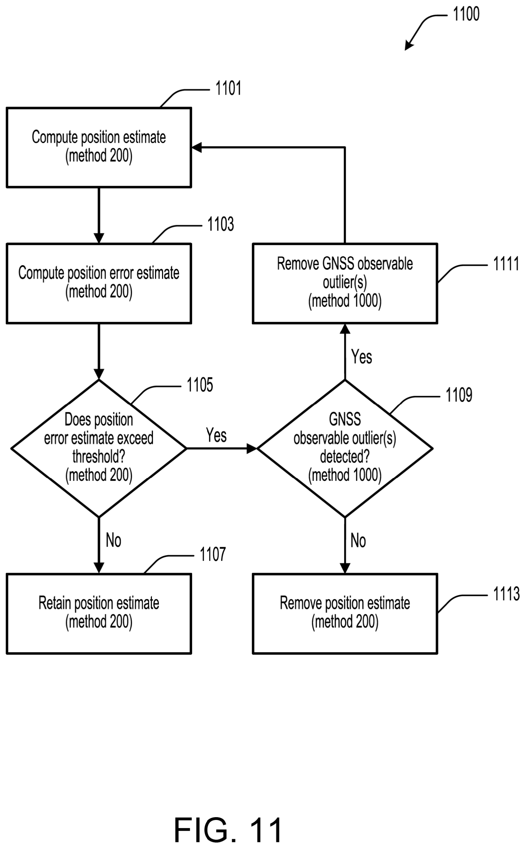

**FIG. 11** illustrates an example method 1100 of detecting and correcting GNSS position outliers by removing GNSS observable outliers, in accordance with some embodiments of the present disclosure. Method 1100 may utilize one or more of the steps of methods 200 and 1000.

At step 1101, a position estimate for the GNSS receiver is computed. Step 1101 may include steps 201, 203, and 205 of method 200.

At step 1103, a position error estimate is computed. Step 1103 may include one or more of steps 207 to 221 of method 200.

At step 1105, it is determined whether the position error estimate exceeds a threshold. If it is determined that the position error estimate exceeds the threshold, method 1100 proceeds to step 1109. Otherwise, method 1100 proceeds to step 1107.

At step 1107, the position estimate is retained. Step 1107 may include step 213 of method 200.

At step 1109, it is determined whether any GNSS observable outliers are detected. Step 1109 may include one or more of steps of method 1000, such as steps 1025 and 1027, and other steps in loop 1042. If any GNSS observable outliers are detected (and the number of clean observables is greater than the minimum requirements for positioning), method 1100 proceeds to step 1111. Otherwise, method 1100 proceeds to step 1113.

At step 1111, the detected GNSS observable outliers are removed. After performing step 1111, method 1100 proceeds to step 1101, computing a new position estimate (after removing one or more GNSS observables at step 1029), then to step 1103, computing a new position error estimate, and then to step 1105, determining whether the new position error estimate exceeds the threshold. If it is determined that the new position error estimate exceeds the threshold, method 1100 proceeds to step 1109. Otherwise, method 1100 proceeds to step 1107.

At step 1113, the (new) position estimate is removed. Step 1113 may include step 227 of method 200.

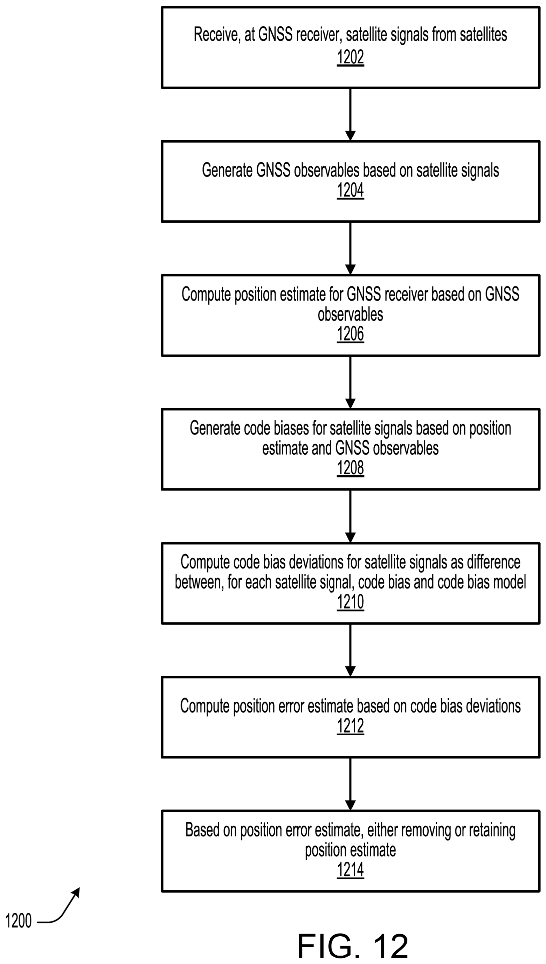

**FIG. 12** illustrates a method 1200 of detecting GNSS position outliers, in accordance with some embodiments of the present disclosure. Alternatively or additionally, method 1200 may be considered a method of determining or estimating an error associated with a satellite-determined position. Steps of method 1200 may be performed in any order and/or in parallel, and one or more steps of method 1200 may be optionally performed. One or more steps of method 1200 may be performed by one or more processors, such as those included in a GNSS receiver. Method 1200 may be implemented as a computer-readable medium or computer program product comprising instructions which, when the program is executed by one or more processors, cause the one or more processors to carry out the steps of method 1200.

At step 1202, a set of satellite signals (e.g., satellite signals 130, 930) are received at a GNSS receiver (e.g., GNSS receivers 102, 902) from a set of satellites. The GNSS receiver may include one or more GNSS antennas configured to receive the set of satellite signals.

At step 1204, GNSS observables (e.g., GNSS observables 106, 906) are generated based on the set of satellite signals. The GNSS observables may include pseudoranges, carrier phase measurements, and other GNSS data used for determining the position of the GNSS receiver. In some examples, satellite positions may also be generated based on the set of satellite signals. The satellite positions may be derived from ephemeris data included in the satellite signals.

At step 1206, a position estimate (e.g., position estimates 110, 910) for the GNSS receiver is computed based on the GNSS observables. The position estimate may be computed further based on the satellite positions included in the ephemeris data. The position estimate may be computed by a GNSS estimator (e.g., GNSS estimators 108, 908) using one of several positioning engines, such as an SPP, DGNSS, PPP, or RTK positioning engine.

In some examples, method 1200 may include determining whether the position estimate was computed using sufficiently clean data so that code bias models can be updated using the position estimate. If the position estimate was not computed using sufficiently clean data, steps for computing a position error estimate using previously generated code bias models may be performed. In some examples, determining whether the position estimate was computed using sufficiently clean data may include determining whether the GNSS data was collected in an open-sky environment or a harsh environment. In some examples, determining whether the position estimate was computed using sufficiently clean data may include determining the number of satellites (more satellites lead to cleaner GNSS data), the SNR ratio (higher SNRs lead to cleaner GNSS data), or the PPP/RTK solution status if available, or analyzing an upward-viewing image to determine whether the GNSS receiver is located in an open-sky environment or a harsh environment (based on detection of large objects in the upward-viewing image).

At step 1208, a set of code biases (e.g., code biases 134, 934) for the set of satellite signals are generated based on the position estimate and the GNSS observables. In some examples, steps 1206 and 1208 may be performed concurrently.

At step 1210, a set of code bias deviations (e.g., code bias deviations 136, 936) for the set of satellite signals are computed as a difference between, for each of the set of satellite signals, a code bias of the set of code biases and a code bias model of a set of code bias models (e.g., code bias models 116, 916).

At step 1212, a position error estimate (e.g., position error estimates 120, 920) is computed based on the set of code bias deviations and the satellite geometry (e.g., the satellite-to-receiver relative positions).

At step 1214, based on the position error estimate, the position estimate is either removed or retained. In some examples, the position error estimate may be compared to a threshold to determine whether the position estimate should be removed or retained. Removing the position estimate may include not forwarding the position estimate to a downstream application, sending a status signal indicating that the position estimate cannot be used in a downstream application, removing the position estimate from a set of time-sequenced position estimates used or outputted by the GNSS receiver, among other possibilities. In some examples, if the position error estimate exceeds the threshold, the position estimate may be labeled or identified as a GNSS position outlier (e.g., GNSS position outliers 104, 904).

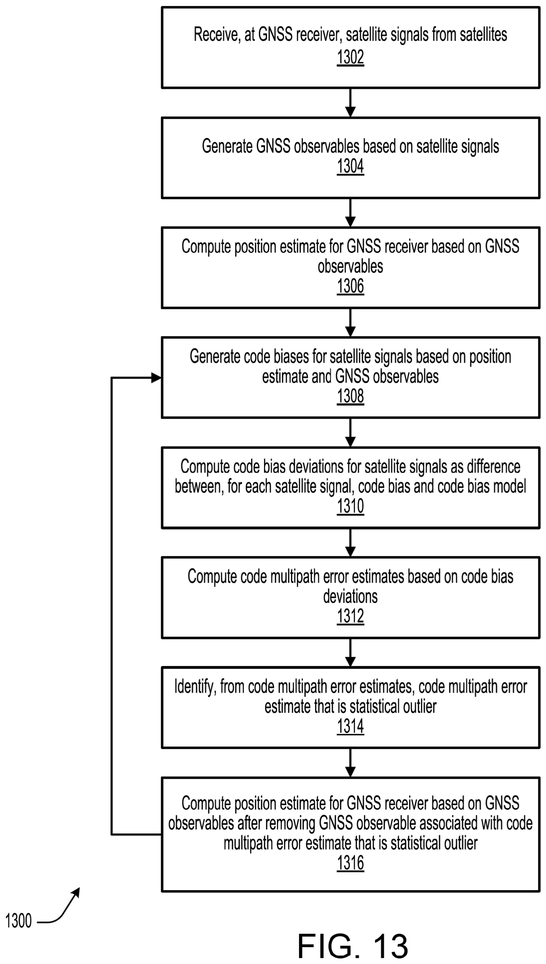

**FIG. 13** illustrates a method 1300 of detecting and removing GNSS observable outliers, in accordance with some embodiments of the present disclosure. Steps of method 1300 may be performed in any order and/or in parallel, and one or more steps of method 1300 may be optionally performed. One or more steps of method 1300 may be performed by one or more processors, such as those included in a GNSS receiver. Method 1300 may be implemented as a computer-readable medium or computer program product comprising instructions which, when the program is executed by one or more processors, cause the one or more processors to carry out the steps of method 1300.

At step 1302, a set of satellite signals (e.g., satellite signals 130, 930) are received at a GNSS receiver (e.g., GNSS receivers 102, 902) from a set of satellites. The GNSS receiver may include one or more GNSS antennas configured to receive the set of satellite signals.

At step 1304, GNSS observables (e.g., GNSS observables 106, 906) are generated based on the set of satellite signals. The GNSS observables may include pseudoranges, carrier phase measurements, and other GNSS data used for determining the position of the GNSS receiver. In some examples, satellite positions may also be generated based on the set of satellite signals. The satellite positions may be derived from ephemeris data included in the satellite signals.

At step 1306, a position estimate (e.g., position estimates 110, 910) for the GNSS receiver is computed based on the GNSS observables. The position estimate may be computed further based on the satellite positions included in the ephemeris data. The position estimate may be computed by a GNSS estimator (e.g., GNSS estimators 108, 908) using one of several positioning engines, such as an SPP, DGNSS, PPP, or RTK positioning engine.

In some examples, method 1300 may include determining whether the position estimate was computed using sufficiently clean data so that code bias models can be updated using the position estimate. If the position estimate was not computed using sufficiently clean data, steps for computing a position error estimate and a set of code multipath error estimates using previously generated code bias models may be performed. In some examples, determining whether the position estimate was computed using sufficiently clean data may include determining whether the GNSS data was collected in an open-sky environment or a harsh environment. In some examples, determining whether the position estimate was computed using sufficiently clean data may include determining the number of satellites (more satellites lead to cleaner GNSS data), the SNR ratio (higher SNRs lead to cleaner GNSS data), or the PPP/RTK solution status if available, or analyzing an upward-viewing image to determine whether the GNSS receiver is located in an open-sky environment or a harsh environment (based on detection of large objects in the upward-viewing image).

At step 1308, a set of code biases (e.g., code biases 134, 934) for the set of satellite signals are generated based on the position estimate and the GNSS observables. In some examples, steps 1306 and 1308 may be performed concurrently.

At step 1310, a set of code bias deviations (e.g., code bias deviations 136, 936) for the set of satellite signals are computed as a difference between, for each of the set of satellite signals, a code bias of the set of code biases and a code bias model of a set of code bias models (e.g., code bias models 126, 916).

At step 1312, a set of code multipath error estimates (e.g., code multipath error estimates 924) are computed based on the set of code bias deviations. The set of code multipath error estimates may be computed further based on a position error estimate (e.g., position error estimates 120, 920), which is computed based on the set of code bias deviations. In some examples, the set of code multipath error estimates are computed further based on satellite geometry (e.g., the satellite-to-receiver relative positions).

At step 1314, a code multipath error estimate that is a statistical outlier is identified from the set of code multipath error estimates. A Z-score may be calculated for each of the set of code multipath error estimates, and each Z-score may be compared to a threshold defined by the user (e.g., 3). If the magnitude of any Z-score is greater than the threshold, the code multipath error estimate associated with that Z-score is identified as a statistical outlier.

At step 1316, a (second) position estimate (e.g., position estimates 110, 910) for the GNSS receiver is computed based on the GNSS observables after removing a GNSS observable associated with the code multipath error estimate that is a statistical outlier. The (second) position estimate may be computed further based on the satellite positions included in the ephemeris data. The (second) position estimate may be computed by the GNSS estimator using one of several positioning engines, such as an SPP, DGNSS, PPP, or RTK positioning engine. Method 1300 may then proceed to step 1308 and continue until no more GNSS observable outliers are identified or the number of clean observables reaches the minimum requirement for positioning.

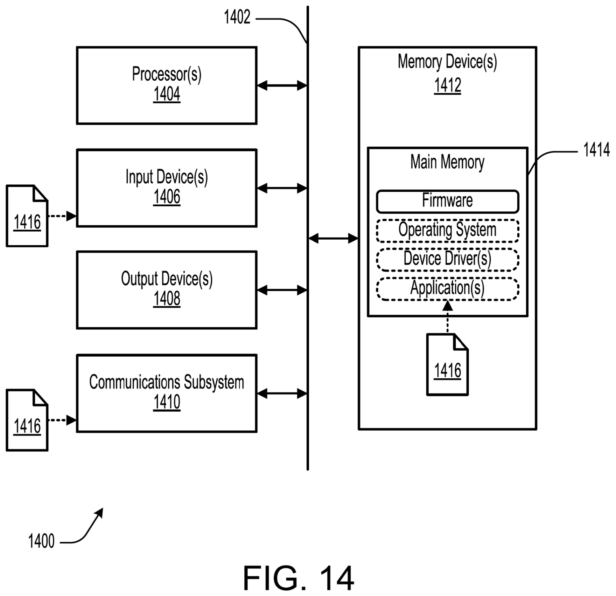

**FIG. 14** illustrates an example computer system 1400 comprising various hardware elements, in accordance with some embodiments of the present disclosure. Computer system 1400 may be incorporated into or integrated with devices described herein and/or may be configured to perform some or all of the steps of the methods provided by various embodiments. For example, in various embodiments, computer system 1400 may be incorporated into a GNSS receiver and/or may be configured to perform methods 200, 1000, 1100, 1200, or 1300. It should be noted that FIG. 14 is meant only to provide a generalized illustration of various components, any or all of which may be utilized as appropriate. FIG. 14, therefore, broadly illustrates how individual system elements may be implemented in a relatively separated or relatively more integrated manner.

In the illustrated example, computer system 1400 includes a communication medium 1402, one or more processor(s) 1404, one or more input device(s) 1406, one or more output device(s) 1408, a communications subsystem 1410, and one or more memory device(s) 1412. Computer system 1400 may be implemented using various hardware implementations and embedded system technologies. For example, one or more elements of computer system 1400 may be implemented within an integrated circuit (IC), an application-specific integrated circuit (ASIC), an application-specific standard product (ASSP), a field-programmable gate array (FPGA), such as those commercially available by XILINX^{®}, INTEL^{®}, or LATTICE SEMICONDUCTOR^{®}, a system-on-a-chip (SoC), a microcontroller, a printed circuit board (PCB), and/or a hybrid device, such as an SoC FPGA, among other possibilities.

The various hardware elements of computer system 1400 may be communicatively coupled via communication medium 1402. While communication medium 1402 is illustrated as a single connection for purposes of clarity, it should be understood that communication medium 1402 may include various numbers and types of communication media for transferring data between hardware elements. For example, communication medium 1402 may include one or more wires (e.g., conductive traces, paths, or leads on a PCB or integrated circuit (IC), microstrips, striplines, coaxial cables), one or more optical waveguides (e.g., optical fibers, strip waveguides), and/or one or more wireless connections or links (e.g., infrared wireless communication, radio communication, microwave wireless communication), among other possibilities.

In some embodiments, communication medium 1402 may include one or more buses that connect the pins of the hardware elements of computer system 1400. For example, communication medium 1402 may include a bus that connects processor(s) 1404 with main memory 1414, referred to as a system bus, and a bus that connects main memory 1414 with input device(s) 1406 or output device(s) 1408, referred to as an expansion bus. The system bus may itself consist of several buses, including an address bus, a data bus, and a control bus. The address bus may carry a memory address from processor(s) 1404 to the address bus circuitry associated with main memory 1414 in order for the data bus to access and carry the data contained at the memory address back to processor(s) 1404. The control bus may carry commands from processor(s) 1404 and return status signals from main memory 1414. Each bus may include multiple wires for carrying multiple bits of information and each bus may support serial or parallel transmission of data.

Processor(s) 1404 may include one or more central processing units (CPUs), graphics processing units (GPUs), neural network processors or accelerators, digital signal processors (DSPs), and/or other general-purpose or special-purpose processors capable of executing instructions. A CPU may take the form of a microprocessor, which may be fabricated on a single IC chip of metal-oxide-semiconductor field-effect transistor (MOSFET) construction. Processor(s) 1404 may include one or more multi-core processors, in which each core may read and execute program instructions concurrently with the other cores, increasing speed for programs that support multithreading.

Input device(s) 1406 may include one or more of various user input devices such as a mouse, a keyboard, a microphone, as well as various sensor input devices, such as an image capture device, a temperature sensor (e.g., thermometer, thermocouple, thermistor), a pressure sensor (e.g., barometer, tactile sensor), a movement sensor (e.g., accelerometer, gyroscope, tilt sensor), a light sensor (e.g., photodiode, photodetector, charge-coupled device), and/or the like. Input device(s) 1406 may also include devices for reading and/or receiving removable storage devices or other removable media. Such removable media may include optical discs (e.g., Blu-ray discs, DVDs, CDs), memory cards (e.g., CompactFlash card, Secure Digital (SD) card, Memory Stick), floppy disks, Universal Serial Bus (USB) flash drives, external hard disk drives (HDDs) or solid-state drives (SSDs), and/or the like.

Output device(s) 1408 may include one or more of various devices that convert information into human-readable form, such as without limitation a display device, a speaker, a printer, a haptic or tactile device, and/or the like. Output device(s) 1408 may also include devices for writing to removable storage devices or other removable media, such as those described in reference to input device(s) 1406. Output device(s) 1408 may also include various actuators for causing physical movement of one or more components. Such actuators may be hydraulic, pneumatic, electric, and may be controlled using control signals generated by computer system 1400.

Communications subsystem 1410 may include hardware components for connecting computer system 1400 to systems or devices that are located external to computer system 1400, such as over a computer network. In various embodiments, communications subsystem 1410 may include a wired communication device coupled to one or more input/output ports (e.g., a universal asynchronous receiver-transmitter (UART)), an optical communication device (e.g., an optical modem), an infrared communication device, a radio communication device (e.g., a wireless network interface controller, a BLUETOOTH^{®} device, an IEEE 802.11 device, a Wi-Fi device, a Wi-Max device, a cellular device), among other possibilities.

Memory device(s) 1412 may include the various data storage devices of computer system 1400. For example, memory device(s) 1412 may include various types of computer memory with various response times and capacities, from faster response times and lower capacity memory, such as processor registers and caches (e.g., L0, L1, L2), to medium response time and medium capacity memory, such as random-access memory (RAM), to lower response times and lower capacity memory, such as solid-state drives and hard drive disks. While processor(s) 1404 and memory device(s) 1412 are illustrated as being separate elements, it should be understood that processor(s) 1404 may include varying levels of on-processor memory, such as processor registers and caches that may be utilized by a single processor or shared between multiple processors.

Memory device(s) 1412 may include main memory 1414, which may be directly accessible by processor(s) 1404 via the address and data buses of communication medium 1402. For example, processor(s) 1404 may continuously read and execute instructions stored in main memory 1414. As such, various software elements may be loaded into main memory 1414 to be read and executed by processor(s) 1404 as illustrated in FIG. 14. Typically, main memory 1414 is volatile memory, which loses all data when power is turned off and accordingly needs power to preserve stored data. Main memory 1414 may further include a small portion of non-volatile memory containing software (e.g., firmware, such as BIOS) that is used for reading other software stored in memory device(s) 1412 into main memory 1414. In some embodiments, the volatile memory of main memory 1414 is implemented as RAM, such as dynamic random-access memory (DRAM), and the non-volatile memory of main memory 1414 is implemented as read-only memory (ROM), such as flash memory, erasable programmable read-only memory (EPROM), or electrically erasable programmable read-only memory (EEPROM).

Computer system 1400 may include software elements, shown as being currently located within main memory 1414, which may include an operating system, device driver(s), firmware, compilers, and/or other code, such as one or more application programs, which may include computer programs provided by various embodiments of the present disclosure. Merely by way of example, one or more steps described with respect to any methods discussed above, may be implemented as instructions 1416, which are executable by computer system 1400. In one example, such instructions 1416 may be received by computer system 1400 using communications subsystem 1410 (e.g., via a wireless or wired signal that carries instructions 1416), carried by communication medium 1402 to memory device(s) 1412, stored within memory device(s) 1412, read into main memory 1414, and executed by processor(s) 1404 to perform one or more steps of the described methods. In another example, instructions 1416 may be received by computer system 1400 using input device(s) 1406 (e.g., via a reader for removable media), carried by communication medium 1402 to memory device(s) 1412, stored within memory device(s) 1412, read into main memory 1414, and executed by processor(s) 1404 to perform one or more steps of the described methods.

In some embodiments of the present disclosure, instructions 1416 are stored on a computer-readable storage medium (or simply computer-readable medium). Such a computer-readable medium may be non-transitory and may therefore be referred to as a non-transitory computer-readable medium. In some cases, the non-transitory computer-readable medium may be incorporated within computer system 1400. For example, the non-transitory computer-readable medium may be one of memory device(s) 1412 (as shown in FIG. 14). In some cases, the non-transitory computer-readable medium may be separate from computer system 1400. In one example, the non-transitory computer-readable medium may be a removable medium provided to input device(s) 1406 (as shown in FIG. 14), such as those described in reference to input device(s) 1406, with instructions 1416 being read into computer system 1400 by input device(s) 1406. In another example, the non-transitory computer-readable medium may be a component of a remote electronic device, such as a mobile phone, that may wirelessly transmit a data signal that carries instructions 1416 to computer system 1400 and that is received by communications subsystem 1410 (as shown in FIG. 14).

Instructions 1416 may take any suitable form to be read and/or executed by computer system 1400. For example, instructions 1416 may be source code (written in a human-readable programming language such as Java, C, C++, C#, Python), object code, assembly language, machine code, microcode, executable code, and/or the like. In one example, instructions 1416 are provided to computer system 1400 in the form of source code, and a compiler is used to translate instructions 1416 from source code to machine code, which may then be read into main memory 1414 for execution by processor(s) 1404. As another example, instructions 1416 are provided to computer system 1400 in the form of an executable file with machine code that may immediately be read into main memory 1414 for execution by processor(s) 1404. In various examples, instructions 1416 may be provided to computer system 1400 in encrypted or unencrypted form, compressed or uncompressed form, as an installation package or an initialization for a broader software deployment, among other possibilities.

In one aspect of the present disclosure, a system (e.g., computer system 1400) is provided to perform methods in accordance with various embodiments of the present disclosure. For example, some embodiments may include a system comprising one or more processors (e.g., processor(s) 1404) that are communicatively coupled to a non-transitory computer-readable medium (e.g., memory device(s) 1412 or main memory 1414). The non-transitory computer-readable medium may have instructions (e.g., instructions 1416) stored therein that, when executed by the one or more processors, cause the one or more processors to perform the methods described in the various embodiments.

In another aspect of the present disclosure, a computer-program product that includes instructions (e.g., instructions 1416) is provided to perform methods in accordance with various embodiments of the present disclosure. The computer-program product may be tangibly embodied in a non-transitory computer-readable medium (e.g., memory device(s) 1412 or main memory 1414). The instructions may be configured to cause one or more processors (e.g., processor(s) 1404) to perform the methods described in the various embodiments.

In another aspect of the present disclosure, a non-transitory computer-readable medium (e.g., memory device(s) 1412 or main memory 1414) is provided. The non-transitory computer-readable medium may have instructions (e.g., instructions 1416) stored therein that, when executed by one or more processors (e.g., processor(s) 1404), cause the one or more processors to perform the methods described in the various embodiments.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes reference to one or more of such users, and reference to "a processor" includes reference to one or more processors and equivalents thereof known to those skilled in the art, and so forth.

Also, the words "comprise," "comprising," "contains," "containing," "include," "including," and "includes," when used in this specification and in the following claims, are intended to specify the presence of stated features, integers, components, or steps, but they do not preclude the presence or addition of one or more other features, integers, components, steps, acts, or groups.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. A method comprising:
receiving, at a global navigation satellite system (GNSS) receiver, a set of satellite signals from a set of satellites;
generating GNSS observables based on the set of satellite signals;
computing a position estimate based on the GNSS observables;
generating a set of code biases for the set of satellite signals based on the position estimate and the GNSS observables;
computing a set of code bias deviations for the set of satellite signals as a difference between, for each of the set of satellite signals, a code bias of the set of code biases and a code bias model of a set of code bias models; and
computing a position error estimate based on the set of code bias deviations.

2. The method of claim 1, further comprising:
in response to determining that the position error estimate is greater than a threshold, removing the position estimate; or
in response to determining that the position error estimate is less than a threshold, retaining the position estimate.

3. The method of any one of the preceding claims, further comprising:
determining, based on whether the position estimate was computed with sufficiently clean data, whether to (i) generate or update the set of code bias models or (ii) to compute the position error estimate using the set of code bias models.

4. The method of claim 3, wherein it is determined to generate or update the set of code bias models if a real-time kinematic (RTK) engine is used to compute the position estimate and the position estimate is in fixed RTK mode.

5. The method of any one of the preceding claims, further comprising:
determining whether the set of code bias models have been previously generated, wherein the set of code bias deviations are computed in response to determining that the set of code bias models have been previously generated.

6. The method of any one of the preceding claims, wherein the GNSS observables include one or both of a set of pseudoranges and a set of carrier phase measurements.

7. The method of any one of the preceding claims, further comprising:
generating a set of satellite positions based on the set of satellite signals, wherein the position estimate is computed further based on the set of satellite positions, and wherein the set of code biases are generated further based on the set of satellite positions.

8. A non-transitory computer-readable medium comprising instructions that, when executed by one or more processors, cause the one or more processors to perform operations comprising:
generating global navigation satellite system (GNSS) observables based on a set of satellite signals received at a GNSS receiver from a set of satellites;
computing a position estimate based on the GNSS observables;
generating a set of code biases for the set of satellite signals based on the position estimate and the GNSS observables;
computing a set of code bias deviations for the set of satellite signals as a difference between, for each of the set of satellite signals, a code bias of the set of code biases and a code bias model of a set of code bias models; and
computing a position error estimate based on the set of code bias deviations.

9. The non-transitory computer-readable medium of claim 9, wherein the operations further comprise:
in response to determining that the position error estimate is greater than a threshold, removing the position estimate; or
in response to determining that the position error estimate is less than a threshold, retaining the position estimate.

10. The non-transitory computer-readable medium of any one of claims 8-9, wherein the operations further comprise:
determining, based on whether the position estimate was computed with sufficiently clean data, whether to (i) generate or update the set of code bias models or (ii) to compute the position error estimate using the set of code bias models.

11. The non-transitory computer-readable medium of claim 10, wherein it is determined to generate or update the set of code bias models if a real-time kinematic (RTK) engine is used to compute the position estimate and the position estimate is in fixed RTK mode.

12. The non-transitory computer-readable medium of any one of claims 8-11, wherein the operations further comprise:
determining whether the set of code bias models have been previously generated, wherein the set of code bias deviations are computed in response to determining that the set of code bias models have been previously generated.

13. The non-transitory computer-readable medium of any one of claims 8-12, wherein the GNSS observables include one or both of a set of pseudoranges and a set of carrier phase measurements.

14. The non-transitory computer-readable medium of any one of claims 8-13, wherein the operations further comprise:
generating a set of satellite positions based on the set of satellite signals, wherein the position estimate is computed further based on the set of satellite positions, and wherein the set of code biases are generated further based on the set of satellite positions.

15. A system comprising:
one or more processors; and
a computer-readable medium according to any one of claims 8-14.
